# EUROPEAN PATENT APPLICATION

(11) **EP 4 707 987 A1**
(43) Date of publication of application: **11.03.2026**
(21) Application number: 24823622.6
(22) Date of filing: 04.06.2024
(51) Int. Cl.: G06F 1/16, H04M 1/02

(54) **HINGE APPARATUS AND ELECTRONIC DEVICE COMPRISING SAME**

(30) Priority: 13.06.2023 KR 20230075816; 24.07.2023 KR 20230096289
(71) Applicant: Samsung Electronics Co., Ltd., Suwon-si, Gyeonggi-do 16677 (KR)
(72) Inventor: CHOI, Soobin, Suwon-si, Gyeonggi-do 16677 (KR); YUN, Sukjin, Suwon-si, Gyeonggi-do 16677 (KR); KANG, Jaeho, Suwon-si, Gyeonggi-do 16677 (KR); KIM, Jongkeun, Suwon-si, Gyeonggi-do 16677 (KR); KIM, Jongyoon, Suwon-si, Gyeonggi-do 16677 (KR); KIM, Hyungsoo, Suwon-si, Gyeonggi-do 16677 (KR); BAIK, Jinwook, Suwon-si, Gyeonggi-do 16677 (KR); CHUNG, Haewoo, Suwon-si, Gyeonggi-do 16677 (KR); HAN, Yonghwa, Suwon-si, Gyeonggi-do 16677 (KR)
(74) Representative: Nederlandsch Octrooibureau
(86) International application number: PCT/KR2024/007626
(87) International publication number: WO 2024/258102

(57) **Abstract**

An electronic device according to an embodiment disclosed herein comprises: a first housing; a second housing; and a hinge apparatus connecting the first housing and the second housing so that the first housing and the second housing can be folded about a folding axis. The hinge apparatus includes: a bracket; a first rotator that is fastened to the bracket and rotates relative to the bracket about a first rotation axis; a second rotator that is fastened to the bracket and rotates relative to the bracket about a second rotation axis; a first rotation guide member fixed to the first housing; a second rotation guide member fixed to the second housing; a first hinge plate which is disposed on the first rotation guide member so as to be movable about the folding axis and rotates relative to the first rotation guide member about a third rotation axis; and a second hinge plate which is disposed on the second rotation guide member so as to be movable about the folding axis and rotates relative to the second rotation guide member about the fourth rotation axis.

## Description

### [Technical Field]

Various embodiments disclosed in this document relate to a hinge apparatus and an electronic device including the hinge apparatus.

### [Background Art]

Electronic devices are becoming slimmer to satisfy the purchasing needs of consumers as the functional gap between manufacturers is significantly reduced, and improvements are being made to increase the rigidity of electronic devices, strengthen the design aspects, and differentiate their functional elements. These electronic devices are gradually evolving from uniform rectangular shapes to various shapes. For example, electronic devices may have a changeable structure that is convenient to carry and may utilize a large-screen display when used. As part of these electronic devices, foldable type electronic devices are continuously being released, and operational reliability may be required for frequent folding operations.

### [Disclosure of Invention]

### [Technical Problem]

The electronic device may include a foldable electronic device that includes a first housing, a second housing foldably connected to the first housing through a hinge apparatus (e.g., hinge structure, hinge module, or hinge assembly). The first housing and the second housing are structurally connected with the hinge apparatus, thereby ensuring operational reliability for the folded state and/or the unfolded state. Such a foldable electronic device may be operated in an in-folding manner and/or an out-folding manner by allowing the first housing to rotate within a range of 0 to 360 degrees relative to the second housing through the hinge apparatus. The foldable electronic device may include a flexible display that is arranged to span across the first housing and the second housing when unfolded 180 degrees. The folding region of the flexible display may be folded or unfolded together with the electronic device.

The foldable electronic device may include a first hinge plate and a second hinge plate disposed respectively in the first housing and the second housing. These hinge plates may support the flexible display by being arranged adjacent to each other when the foldable electronic device is in the unfolded state. Additionally, the hinge plates may support the flexible display so that the folding region of the flexible display maintains a water drop shape when the foldable electronic device is in the folded state.

The hinge apparatus may include a bracket, a first rotate and a second rotate disposed on the bracket. The first hinge plate may be connected to the first rotate, and the second hinge plate may be connected to the second rotate, so that they rotate relative to the bracket as the electronic device is folded or unfolded.

Meanwhile, the rotation axes of the plural rotates and the rotation axes of the plural hinge plates may be different from each other. For example, the rotation axes of the first rotate and the first hinge plate may be different from each other, and the rotation axes of the second rotate and the second hinge plate may be different from each other. In such a case, a difference may occur in the rotational trajectories of the plural rotates and plural hinge plates, which may cause buckling in the folding region of the flexible display module.

An embodiment of the disclosure may provide a method for compensating for a difference in rotational trajectories due to different rotation axes of the plural rotates and plural hinge plates.

### [Solution to Problem]

According to an embodiment of the disclosure, an electronic device may include: a first housing; a second housing; and a hinge apparatus that foldably connects the first housing and the second housing with respect to a folding axis, wherein the hinge apparatus may include a bracket, a first rotate that is fastened to the bracket and rotates relative to the bracket with respect to a first rotation axis, a second rotate that is fastened to the bracket and rotates relative to the bracket with respect to a second rotation axis, a first rotation guide member fixed to the first housing, a second rotation guide member fixed to the second housing, a first hinge plate that is arranged on the first rotate to be movable relative to the folding axis and rotates relative to the first rotation guide member with respect to a third rotation axis, and a second hinge plate that is arranged on the second rotate to be movable relative to the folding axis and rotates relative to the second rotation guide member with respect to a fourth rotation axis.

According to an embodiment of the disclosure, a hinge apparatus, which foldably connects a first housing and a second housing of an electronic device with respect to a folding axis, may include: a bracket; a first rotate that is fastened to the bracket and rotates relative to the bracket with respect to a first rotation axis; a second rotate that is fastened to the bracket and rotates relative to the bracket with respect to a second rotation axis; a first rotation guide member fixed to the first housing and rotating relative to the bracket; a second rotation guide member fixed to the second housing and rotating relative to the bracket with respect to a fourth rotation axis; a first hinge plate that is arranged on the first rotate to be movable relative to the folding axis and is coupled to the first rotation guide member to be rotated relative to the first rotation guide member with respect to a third rotation axis; and a second hinge plate that is arranged on the second rotate to be movable relative to the folding axis and is coupled to the second rotation guide member to be rotated relative to the second rotation guide member with respect to the fourth rotation axis.

### [Advantageous Effects of Invention]

According to an embodiment disclosed in this document, the hinge plates arranged respectively in the plural rotates may move in a straight line by a preset distance relative to the plural rotates when the electronic device is folded or unfolded. In this case, it is possible to compensate for a difference in the rotational trajectory due to different rotational axes of the plural rotates and the plural hinge plates.

In addition, the hinge plates may be coupled to the rotates through separate fixing members rather than being coupled to the rotates through pins. In this case, the contact area between the hinge plates and the rotates may be increased compared to the fixing scheme using pins, thereby improving the fastening rigidity.

### [Brief Description of Drawings]

In connection with the description of the drawings, the same or similar reference symbols may be used for identical or similar components.
FIGS. 1A and 1B are front and rear views of an electronic device in unfolded state according to an embodiment of the disclosure.
FIGS. 2A and 2B are front and rear views of the electronic device in folded state according to an embodiment of the disclosure.
FIG. 3 is an exploded perspective view of the electronic device according to an embodiment of the disclosure.
FIG. 4A is a perspective view of a hinge assembly when the electronic device is in the unfolded state according to an embodiment of the disclosure.
FIG. 4B is a perspective view of the hinge assembly when the electronic device is in the folded state according to an embodiment of the disclosure.
FIG. 5A is an assembled perspective view of the hinge assembly according to an embodiment of the disclosure.
FIG. 5B is a front view of the hinge assembly when the electronic device is in the unfolded state according to an embodiment of the disclosure.
FIG. 5C is a perspective view of a hinge apparatus according to an embodiment of the disclosure.
FIG. 6A is an enlarged view of the opening and the rotation rib of a hinge plate according to an embodiment of the disclosure.
FIGS. 6B and 6C are views illustrating a coupling relationship between a rotate link, a rotate, and a fixing member according to an embodiment of the disclosure.
FIG. 6D is a view illustrating a coupling relationship between a rotation guide member and a hinge plate according to an embodiment of the disclosure.
FIGS. 7A to 7C are cross-sectional views of the hinge assembly cut along line A-A in FIG. 5B.
FIGS. 8A to 8C are cross-sectional views of the hinge assembly cut along line B-B in FIG. 5B.
FIGS. 9A to 9C are cross-sectional views of the hinge assembly cut along line C-C in FIG. 5B.
FIGS. 10A to 10C are cross-sectional views of the hinge assembly cut along line D-D in FIG. 5B.
FIGS. 11A and 11B are views illustrating a coupling relationship between a rotate and a hinge plate according to an embodiment of the disclosure.
FIG. 11C is a rear view of the hinge plate illustrated in FIG. 11A.
FIG. 11D is a cross-sectional view cut along line A'-A' in FIG. 11C.
FIG. 11E is a cross-sectional view cut along line B'-B' in FIG. 11C.
FIGS. 12A and 12B are views illustrating a coupling relationship between a rotate and a hinge plate according to an embodiment of the disclosure.
FIG. 12C is a rear view of the hinge plate illustrated in FIG. 12A.
FIG. 12D is a cross-sectional view cut along line C'-C' in FIG. 12C.
FIG. 12E is a cross-sectional view cut along line D'-D' in FIG. 12C.

### [Mode for the Invention]

Various embodiments of this document and terms used therein are not intended to limit the technical features described in this document to specific embodiments, and should be understood as including various modifications, equivalents, or substitutes of a corresponding embodiment.

With regard to the description of the drawings, similar reference numerals may be used to refer to similar or related elements. A singular form of a noun corresponding to a specific item may include one or multiple instances of the item unless the relevant context clearly indicates otherwise.

In this document, each of phrases such as "A or B", "at least one of A and B", "at least one of A or B", "A, B or C", "at least one of A, B and C", and "at least one of A, B or C" may include any one of or all possible combinations of the items enumerated together in the corresponding one of the phrases. Terms such as "1st" and "2nd", or "first" and "second" may be used to simply distinguish a corresponding component from another, and does not limit the components in other aspect (e.g., importance or order). When an element (e.g., first element) is referred to, with or without the term "operably" or "communicatively", as "coupled to/with" or "connected to/with" another element (e.g., second element), this means that the element may be connected or coupled to the other element directly (e.g., wiredly), wirelessly, or via a third element.

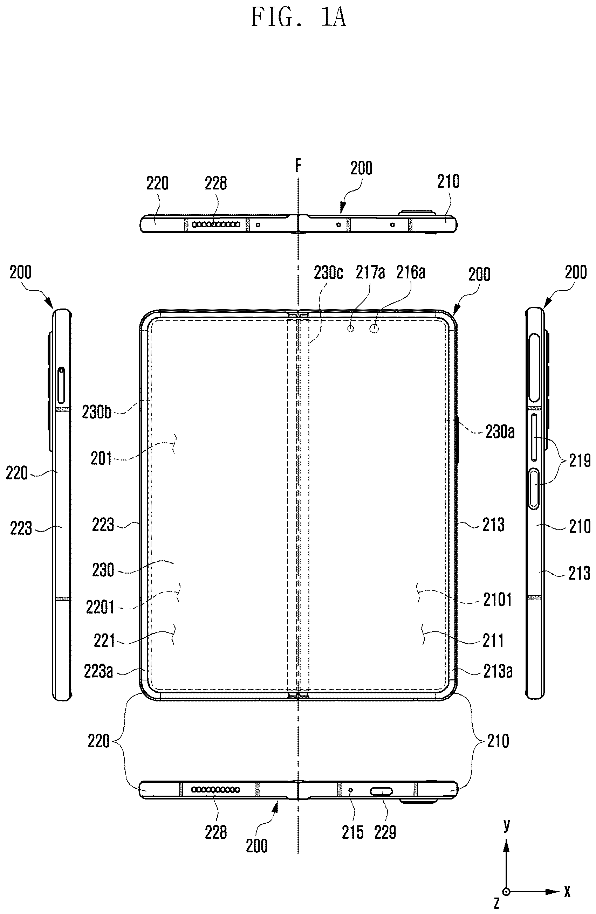

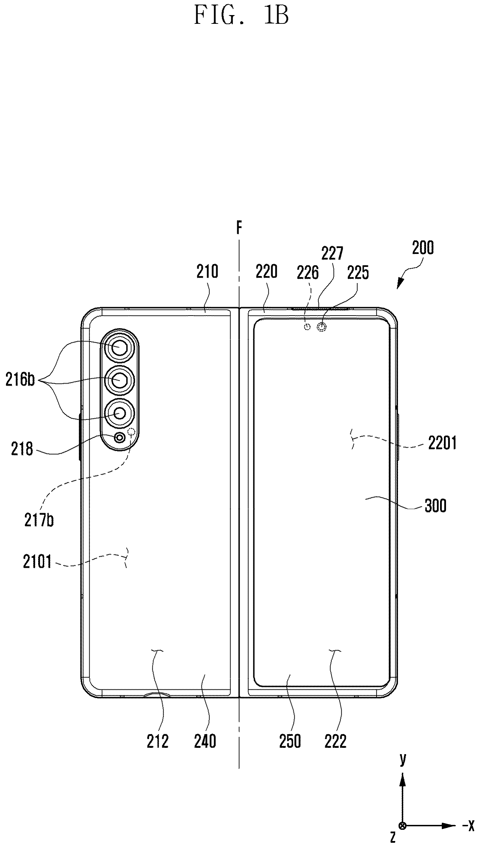

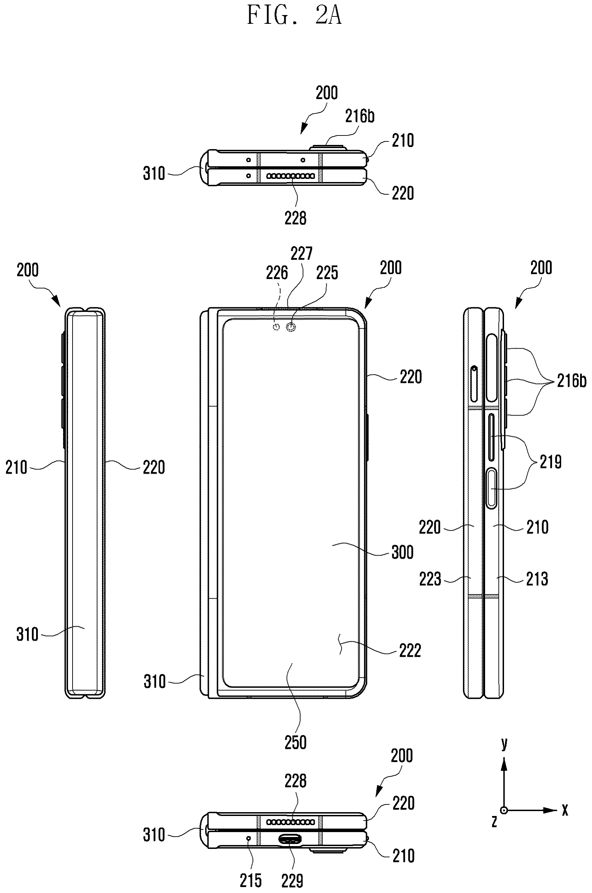

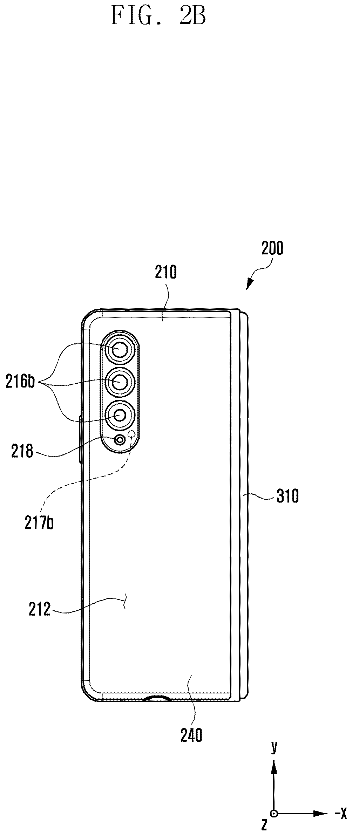

FIGS. 1A and 1B are front and rear views of an electronic device in unfolded state according to various embodiments of the disclosure. FIGS. 2A and 2B are front and rear views of the electronic device in folded state according to various embodiments of the disclosure.

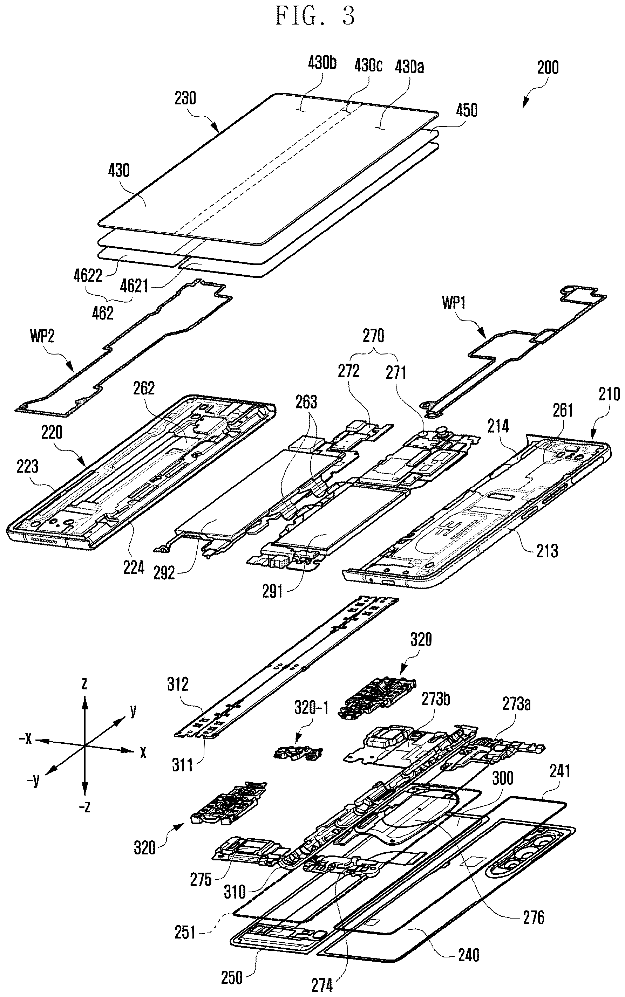

With reference to FIGS. 1A to 2B, the electronic device 200 may include a pair of housings 210 and 220 (e.g., foldable housing structure) that are rotatably coupled with respect to a folding axis F through at least one hinge apparatus (e.g., hinge apparatus 320 in FIG. 3) (e.g., hinge module or hinge structure) so as to be foldable relative to each other, a first display 230 (e.g., flexible display, foldable display, or main display) arranged through the pair of housings 210 and 220, and/or a second display 300 (e.g., sub-display) arranged through the second housing 220. In an embodiment, the at least one hinge apparatus (e.g., hinge apparatus 320 in FIG. 3) may be disposed so as to be at least partially invisible from the outside through the first housing 210 and the second housing 220, and may be disposed in the unfolded state so as to be invisible from the outside through a hinge housing 310 (e.g., hinge cover) that covers the foldable part. In this document, the surface on which the first display 230 is disposed may be defined as the front surface of the electronic device 200, and the opposite surface of the front surface may be defined as the rear surface of the electronic device 200. Additionally, the surface surrounding the space between the front surface and the rear surface may be defined as the side surface of the electronic device 200.

According to an embodiment, the pair of housings 210 and 220 may include a first housing 210 and a second housing 220 that are foldably arranged relative to each other through at least one hinge apparatus (e.g., hinge apparatus 320 in FIG. 3). In an embodiment, the pair of housings 210 and 220 are not limited to the shape and combination shown in FIGS. 1A to 2B, and may be implemented in other shapes and/or parts or combinations thereof. In an embodiment, the first housing 210 and the second housing 220 may be disposed on both sides with respect to the folding axis F, and may be folded to have a shape that is largely symmetrical with respect to the folding axis F and to be aligned with each other. According to a certain embodiment, the first housing 210 and the second housing 220 may be folded asymmetrically with respect to the folding axis F. In an embodiment, the angle or distance between the first housing 210 and the second housing 220 may be varied depending on whether the electronic device 200 is in the unfolded state, the folded state, or the intermediate state.

According to an embodiment, the first housing 210 may be connected to at least one hinge apparatus (e.g., hinge apparatus 320 in FIG. 3) in the unfolded state of the electronic device 200, and may include a first surface 211 disposed to face the front surface of the electronic device 200, a second surface 212 facing in an opposite direction to the first surface 211, and/or a first lateral member 213 surrounding at least a portion of the first space 2101 between the first surface 211 and the second surface 212. In an embodiment, the second housing 220 may be connected to at least one hinge apparatus (e.g., hinge apparatus 320 in FIG. 3) in the unfolded state of the electronic device 200, and may include a third surface 221 disposed to face the front surface of the electronic device 200, a fourth surface 222 facing in an opposite direction to the third surface 221, and/or a second lateral member 223 surrounding at least a portion of the second space 2201 between the third surface 221 and the fourth surface 222. In an embodiment, the first surface 211 may face substantially in the same direction as the third surface 221 in the unfolded state, and/or may face at least partially the third surface 221 in the folded state. In an embodiment, the electronic device 200 may include a recess 201 formed to accommodate the first display 230 through structural coupling between the first housing 210 and the second housing 220. In an embodiment, the recess 201 may have substantially the same size as the first display 230. In an embodiment, the first housing 210 may include a first protection frame 213a (e.g., first decoration member) that covers the edge of the first display 230 so that it is not visible from the outside by being coupled with the first lateral member 213 and disposed to overlap with the edge of the first display 230 when the first display 230 is viewed from above. In an embodiment, the first protection frame 213a may be formed integrally with the first lateral member 213. In an embodiment, the second housing 220 may include a second protection frame 223a (e.g., second decoration member) that covers the edge of the first display 230 so that it is not visible from the outside by being coupled with the second lateral member 223 and disposed to overlap the edge of the first display 230 when the first display 230 is viewed from above. In an embodiment, the second protection frame 223a may be formed integrally with the second lateral member 223. In a certain embodiment, the first protection frame 213a and the second protection frame 223a may be omitted.

According to an embodiment, the hinge housing 310 (e.g., hinge cover) may be disposed between the first housing 210 and the second housing 220 so as to hide a portion of the at least one hinge apparatus (e.g., hinge apparatus 320 in FIG. 3). In an embodiment, the hinge housing 310 may be hidden by a portion of the first housing 210 and the second housing 220 or exposed to the outside, depending on the unfolded state, the folded state, or the intermediate state of the electronic device 200. For example, when the electronic device 200 is in the unfolded state, at least a portion of the hinge housing 310 may be arranged to be substantially invisible from the outside by being hidden by the first housing 210 and the second housing 220. In an embodiment, when the electronic device 200 is in the folded state, at least a portion of the hinge housing 310 may be disposed to be visible from the outside between the first housing 210 and the second housing 220. In an embodiment, when the first housing 210 and the second housing 220 are in an intermediate state of being folded with a certain angle, the hinge housing 310 may be disposed to be at least partially visible from the outside of the electronic device 200 between the first housing 210 and the second housing 220. For example, the area of the hinge housing 310 exposed to the outside may be smaller compared with when being fully folded. In an embodiment, the hinge housing 310 may include a curved surface.

According to an embodiment, when the electronic device 200 is in the unfolded state (e.g., the state illustrated in FIG. 1A and FIG. 1B), the first housing 210 and the second housing 220 may be arranged to form an angle of about 180 degrees, so that the first region 230a, the second region 230b, and the folding region 230c of the first display 230 may be on substantially the same plane to face in the same direction (e.g., z-axis direction). According to an embodiment, when the electronic device 200 is in the unfolded state, the first housing 210 may be rotated at an angle of about 360 degrees with respect to the second housing 220 so that the second surface 212 and the fourth surface 222 face each other, folding in the opposite direction (out folding scheme).

According to an embodiment, when the electronic device 200 is in the folded state (e.g., the state of FIGS. 2A and 2B), the first surface 211 of the first housing 210 and the third surface 221 of the second housing 220 may be disposed to face each other. In this case, the first region 230a and the second region 230b of the first display 230 may be arranged to face each other through the folding region 230c while forming a narrow angle (e.g., in the range of 0 degrees to about 10 degrees). In an embodiment, at least a portion of the folding region 230c may be changed to a curved shape having a specific curvature. In an embodiment, when the electronic device 200 is in the intermediate state, the first housing 210 and the second housing 220 may be disposed to make a specific angle with respect to each other. In this case, the first region 230a and the second region 230b of the first display 230 may make an angle that is greater than that for the folded state and less than that for the unfolded state, and the curvature of the folding region 230c may be less than that for the folded state and greater than that for the unfolded state. In a certain embodiment, the first housing 210 and the second housing 220 may make an angle at which they can stop at a designated folding angle between the folded state and the unfolded state through at least one hinge apparatus (e.g., hinge apparatus 320 in FIG. 3) (free stop functionality). In a certain embodiment, the first housing 210 and the second housing 220 may be pressurized to continuously operate in the unfolding or folding direction with respect to a specified inflection angle through at least one hinge apparatus (e.g., hinge apparatus 320 in FIG. 3).

According to an embodiment, the electronic device 200 may include at least one of at least one display 230 and 300, input device 215, sound output devices 227 and 228, sensor modules 217a, 217b and 226, camera modules 216a, 216b and 225, key input device 219, indicator (not shown), or connector port 229, which are disposed in the first housing 210 and/or the second housing 220. In a certain embodiment, at least one of the components may be omitted from the electronic device 200, or at least one other component may be additionally included in the electronic device 200.

According to an embodiment, the at least one display 230 and 300 may include a first display 230 (e.g., flexible display) that is disposed to be supported by the first surface 211 of the first housing 210 and the third surface 221 of the second housing 220, and a second display 300 that is disposed in the internal space of the second housing 220 so as to be at least partially visible from the outside through the fourth surface 222. In a certain embodiment, the second display 300 may be arranged in the internal space of the first housing 210 so as to be visible from the outside through the second surface 212. In an embodiment, the first display 230 may be used primarily in the unfolded state of the electronic device 200, and the second display 300 may be used primarily in the folded state of the electronic device 200. In an embodiment, when in the intermediate state, the electronic device 200 may control the first display 230 and/or the second display 300 to be usable based on the folding angle between the first housing 210 and the second housing 220.

According to an embodiment, the first display 230 may be disposed in an accommodation space formed by the pair of housings 210 and 220. For example, the first display 230 may be disposed in the recess 201 formed by the pair of housings 210 and 220 so as to occupy substantially most of the front surface of the electronic device 200 in the unfolded state. In an embodiment, the first display 230 may include a flexible display whose at least a region may be changed into a flat or curved surface. In an embodiment, the first display 230 may include a first region 230a facing the first housing 210, and a second region 230b facing the second housing 220. In an embodiment, the first display 230 may include a folding region 230c that includes a portion of the first region 230a and a portion of the second region 230b with respect to the folding axis F. In an embodiment, at least a portion of the folding region 230c may include a region that corresponds to at least one hinge apparatus (e.g., hinge apparatus 320 in FIG. 3). In an embodiment, the regional division of the first display 230 is an illustrative demarcation made by the pair of housings 210 and 220 and the at least one hinge apparatus (e.g., hinge apparatus 320 in FIG. 3), and the first display 230 may present a single seamless full screen through the pair of housings 210 and 220 and the at least one hinge apparatus (e.g., hinge apparatus 320 in FIG. 3). In an embodiment, the first region 230a and the second region 230b may have an overall symmetrical shape or a partially asymmetrical shape with respect to the folding region 230c.

According to an embodiment, the electronic device 200 may include a first rear cover 240 disposed on the second surface 212 of the first housing 210, and a second rear cover 250 disposed on the fourth surface 222 of the second housing 220. In a certain embodiment, at least a portion of the first rear cover 240 may be formed integrally with the first lateral member 213. In a certain embodiment, at least a portion of the second rear cover 250 may be formed integrally with the second lateral member 223. In an embodiment, at least one of the first rear cover 240 or the second rear cover 250 may be made of a substantially transparent plate (e.g., glass plate including various coating layers, or polymer plate) or an opaque plate. In an embodiment, the first rear cover 240 may be made of an opaque plate, such as coated or colored glass, ceramic, polymer, metal (e.g., aluminum, stainless steel (STS), or magnesium), or a combination of at least two thereof. In an embodiment, the second rear cover 250 may be made of a substantially transparent plate such as glass or polymer. Hence, the second display 300 may be disposed in the internal space of the second housing 220 so as to be visible from the outside through the second rear cover 250.

According to an embodiment, the input device 215 may include a microphone. In a certain embodiment, the input device 215 may include a plurality of microphones arranged to detect the direction of a sound. In an embodiment, the sound output devices 227 and 228 may include speakers. In an embodiment, the sound output devices 227 and 228 may include a call receiver 227 disposed through the fourth surface 222 of the second housing 220, and an external speaker 228 disposed through at least a portion of the second lateral member 223 of the second housing 220. In a certain embodiment, the input device 215, the sound output devices 227 and 228, and the connector 229 may be arranged in the spaces of the first housing 210 and/or the second housing 220, and may be exposed to the external environment through at least one hole formed in the first housing 210 and/or the second housing 220. In a certain embodiment, the holes formed in the first housing 210 and/or the second housing 220 may be used in common for the input device 215 and the sound output devices 227 and 228. In a certain embodiment, the sound output devices 227 and 228 may include a speaker (e.g., piezo speaker) that operates without the holes formed in the first housing 210 and/or the second housing 220.

According to an embodiment, the camera modules 216a, 216b and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. In an embodiment, the electronic device 200 may include a flash 218 disposed close to the second camera module 216b. In an embodiment, the flash 218 may include, for example, a light-emitting diode or a xenon lamp. In an embodiment, the camera modules 216a, 216b and 225 may include one or multiple lenses, an image sensor, and/or an image signal processor. In a certain embodiment, at least one of the camera modules 216a, 216b and 225 may include two or more lenses (e.g., wide-angle and telephoto lenses) and image sensors, and may be disposed together on one surface of the first housing 210 and/or the second housing 220.

According to an embodiment, the sensor modules 217a, 217b and 226 may generate an electrical signal or data value corresponding to an internal operating state of the electronic device 200 or an external environmental state. In an embodiment, the sensor modules 217a, 217b and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In a certain embodiment, the sensor modules 217a, 217b and 226 may include at least one of a gesture sensor, a grip sensor, a color sensor, an infrared (IR) sensor, an illuminance sensor, an ultrasonic sensor, an iris recognition sensor, or a distance detection sensor (e.g., time of flight (TOF) sensor or light detection and ranging (LiDAR) sensor).

According to an embodiment, the electronic device 200 may further include at least one of sensor modules not shown, such as a pressure sensor, a magnetic sensor, a biometric sensor, a temperature sensor, a humidity sensor, or a fingerprint recognition sensor. In a certain embodiment, the fingerprint recognition sensor may be disposed through at least one lateral member among the first lateral member 213 of the first housing 210 and/or the second lateral member 223 of the second housing 220.

According to an embodiment, the key input devices 219 may be disposed to be exposed externally through the first lateral member 213 of the first housing 210. In a certain embodiment, the key input devices 219 may be disposed to be exposed externally through the second lateral member 223 of the second housing 220. In a certain embodiment, the electronic device 200 may not include some or all of the key input devices 219, and those key input devices 219 not included may be implemented in other forms, such as soft keys on at least one display 230 and 300. According to an embodiment, the key input devices 219 may be implemented by utilizing a pressure sensor included in the at least one display 230 and 300.

According to an embodiment, the connector port 229 may include a connector (e.g., USB connector or interface connector port module (IF module)) for transmitting and receiving power and/or data to and from an external electronic device. In a certain embodiment, the connector port 229 may also perform a function for transmitting and receiving audio signals to and from the external electronic device, or may further include a separate connector port (e.g., ear jack hole) for performing a function for transmitting and receiving audio signals.

According to an embodiment, at least one camera module 216a and 225 among the camera modules 216a, 216b and 225, at least one sensor module 217a and 226 among the sensor modules 217a, 217b and 226, and/or the indicator may be arranged to be exposed through the at least one display 230 and 300. For example, at least one camera module 216a and 225, at least one sensor module 217a and 226, and/or the indicator may be arranged below the active area (display area) of the at least one display 230 and 300 in the internal spaces of at least one housing 210 and 220 so as to come into contact with the external environment through an opening perforated up to the cover member (e.g., window layer (not shown) of the first display) and/or the second rear cover 250 or through a transparent region. In an embodiment, the area where at least one display 230 and 300 and at least one camera module 216a and 225 face may be formed as a transmissive region having a specific transmittance as part of the area displaying the content. In an embodiment, the transmissive region may be formed to have a transmittance in the range of about 5 percent to about 20 percent. This transmissive region may include a region overlapping with the effective area (e.g., field of view area) of at least one camera module 216a and 225 through which light passes to form an image through image formation of the image sensor. For example, the transmissive region of the displays 230 and 300 may include a region with a lower pixel density compared to the surrounding regions. For example, the transmissive region may replace the opening. For example, the at least one camera module 216a and 225 may include an under display camera (UDC) or an under panel camera (UPC). According to an embodiment, some camera modules or sensor modules 217a and 226 may be arranged so as to perform their functions without being visually exposed through the display. For example, the region facing the camera modules 216a and 225 and/or sensor modules 217a and 226 disposed under the displays 230 and 300 (e.g., display panel) may have an under display camera (UDC) structure, so that a perforated opening may be not necessary.

FIG. 3 is an exploded perspective view of the electronic device according to various embodiments of the disclosure.

With reference to FIG. 3, the electronic device 200 may include a first display 230 (e.g., flexible display), a second display 300, at least one hinge apparatus 320, a pair of support members 261 and 262, at least one board 270 (e.g., printed circuit board (PCB)), a first housing 210, a second housing 220, a first rear cover 240, and/or a second rear cover 250.

According to an embodiment, the first display 230 may include a display panel 430 (e.g., flexible display panel) and a support plate 450 disposed under the display panel 430. In an embodiment, the first display 230 may include a reinforcing plate 462 disposed under the support plate 450. In a certain embodiment, the reinforcing plates 462 may be omitted. In an embodiment, the display panel 430 may include a first panel region 430a corresponding to the first region (e.g., first region 230a in FIG. 1A) of the first display 230, a second panel region 430b extending from the first panel region 430a and corresponding to the second region (e.g., second region 230b in FIG. 1A) of the first display 230, and a third panel region 430c connecting the first panel region 430a and the second panel region 430b and corresponding to the folding region (e.g., folding region 230c in FIG. 1A) of the first display 230. In an embodiment, the support plate 450 may be disposed between the display panel 430 and the pair of support members 261 and 262, and may be formed to have a material and shape that can provide a flat support structure for the first panel region 430a and the second panel region 430b and a bendable structure to aid in bendability for the third panel region 430c. In an embodiment, the support plate 450 may be made of a conductive material (e.g., metal) or a non-conductive material (e.g., polymer or fiber reinforced plastics (FRP)). In an embodiment, the reinforcing plate 462 may include, between the support plate 450 and the pair of support members 261 and 262, a first reinforcing plate 4621 disposed to correspond to at least a portion of the first panel region 430a and the third panel region 430c, and a second reinforcing plate 4622 disposed to correspond to at least a portion of the second panel region 430b and the third panel area 430c. In an embodiment, the reinforcing plate 462 may be made of a metal material (e.g., SUS) to help reinforce the ground connection structure and rigidity for the first display 230. In a certain embodiment, the electronic device 200 may include a digitizer that is disposed under the support plate 450 to replace the reinforcing plate 462 or to be added between the support plate 450 and the reinforcing plate 462.

According to an embodiment, the second display 300 may be disposed in the space between the second housing 220 and the second rear cover 250. In an embodiment, the second display 300 may be disposed in the space between the second housing 220 and the second rear cover 250 so as to be visible from the outside through substantially the whole area of the second rear cover 250.

According to an embodiment, at least a portion of the first support member 261 may be foldably coupled to the second support member 262 through at least one hinge apparatus 320. In an embodiment, the electronic device 200 may include at least one wiring member 263 (e.g., flexible printed circuit board (FPCB)) that is disposed from at least a portion of the first support member 261 across the at least one hinge apparatus 320 up to a portion of the second support member 262. In an embodiment, the first support member 261 may be arranged in a manner that extends from the first lateral member 213 or is structurally coupled with the first lateral member 213. In an embodiment, the electronic device 200 may include a first space (e.g., first space 2101 in FIG. 1A) provided through the first support member 261 and the first rear cover 240. In an embodiment, the first housing 210 (e.g., first housing structure) may be configured through a combination between the first lateral member 213, the first support member 261, and the first rear cover 240. In an embodiment, the second support member 262 may be arranged in a manner that extends from the second lateral member 223 or is structurally coupled with the second lateral member 223. In an embodiment, the electronic device 200 may include a second space (e.g., second space 2201 in FIG. 1A) provided through the second support member 262 and the second rear cover 250. In an embodiment, the second housing 220 (e.g., second housing structure) may be configured through a combination between the second lateral member 223, the second support member 262, and the second rear cover 250. In an embodiment, at least some of the at least one wiring member 263 and/or the at least one hinge apparatus 320 may be arranged to be supported by at least a portion of the pair of support members 261 and 262. In an embodiment, the at least one wiring member 263 may be arranged to extend from the first support member 261 across the folding axis F to the second support member 262. In an embodiment, the at least one wiring member 263 may be arranged to have a length in a direction (e.g., x-axis direction) substantially perpendicular to the folding axis (e.g., y-axis or folding axis F in FIG. 1A).

According to an embodiment, the at least one board 270 may include a first board 271 disposed in the first space 2101 and a second board 272 disposed in the second space 2201. In an embodiment, the first board 271 and the second board 272 may include a plurality of electronic components arranged to implement various functions of the electronic device 200. In an embodiment, the first board 271 and the second board 272 may be electrically connected through the at least one wiring member 263.

According to an embodiment, the electronic device 200 may include at least one battery 291 and 292. In an embodiment, the at least one battery 291 and 292 may include a first battery 291 disposed in the first space 2101 of the first housing 210 and electrically connected to the first board 271, and a second battery disposed in the second space 2201 of the second housing 220 and electrically connected to the second board 272. In an embodiment, the first support member 261 and the second support member 262 may further include at least one swelling hole for the first battery 291 and the second battery 292.

According to an embodiment, the first housing 210 may include a first rotation support surface 214, and the second housing 220 may include a second rotation support surface 224 corresponding to the first rotation support surface 214. In an embodiment, the first rotation support surface 214 and the second rotation support surface 224 may include a curved surface corresponding to (smoothly connected to) the curved outer surface of the hinge housing 310. In an embodiment, when the electronic device 200 is in the unfolded state, the first rotation support surface 214 and the second rotation support surface 224 may hide the hinge housing 310 so as not to expose the hinge housing 310 to the rear surface of the electronic device 200 or to expose only a portion of the hinge housing 310. In an embodiment, when the electronic device 200 is in the folded state, the first rotation support surface 214 and the second rotation support surface 224 may rotate along the curved outer surface of the hinge housing 310 to expose at least a portion of the hinge housing 310 to the rear surface of the electronic device 200.

According to an embodiment, the electronic device 200 may include at least one antenna 276 disposed in the first space 2101. In an embodiment, the at least one antenna 276 may be disposed on the first battery 291 and the first rear cover 240 in the first space 2101. In an embodiment, the at least one antenna 276 may include, for example, a near field communication (NFC) antenna, a wireless charging antenna, and/or a magnetic secure transmission (MST) antenna. In an embodiment, the at least one antenna 276 may be capable of, for example, performing short-range communication with, or wirelessly transmitting and receiving power for charging to and from an external device. In a certain embodiment, the antenna structure may be formed by at least a portion of the first lateral member 213 or the second lateral member 223 and/or a portion of the first support member 261 and the second support member 262 or a combination thereof.

According to an embodiment, the electronic device 200 may further include at least one electronic component assembly 274 and 275 and/or additional support members 263 and 273 arranged in the first space (e.g., first space 2101 in FIG. 1A) and/or the second space (e.g., second space 2201 in FIG. 1A). For example, the at least one electronic component assembly may include an interface connector port assembly 274 or a speaker assembly 275.

According to an embodiment, the electronic device 200 may include a first waterproof member WP1 disposed between the first reinforcing plate 4621 and the first support member 261, and a second waterproof member WP2 disposed between the second reinforcing plate 4622 and the second support member 262. In an embodiment, the first waterproof member WP1 may provide at least one first waterproof space between the first reinforcing plate 4621 and the first support member 261. In an embodiment, the at least one first waterproof space may accommodate a region corresponding to at least one electronic component (e.g., camera module or sensor module) disposed to be supported by the first support member 261. In an embodiment, the second waterproof member WP2 may provide a second waterproof space between the second reinforcing plate 4622 and the second support member 262. In an embodiment, the second waterproof space may accommodate at least a portion of a bending part (e.g., chip on plastic (COP)) that folds toward the rear surface of the first display 230.

According to an embodiment, the electronic device 200 may include a waterproof tape 241 disposed between the first rear cover 240 and the first housing 210. In an embodiment, the electronic device 200 may include a bonding member 251 disposed between the second rear cover 250 and the second housing 220. In a certain embodiment, the bonding member 251 may be disposed between the second display 300 and the second housing 220. In a certain embodiment, the waterproof tape 241 may be replaced with the bonding member 251, and the bonding member 251 may be replaced with the waterproof tape 241.

According to an embodiment, the at least one hinge apparatus 320 may include a pair of hinge apparatuses 320 arranged at both ends in a direction parallel to the folding axis F. In a certain embodiment, three or more hinge apparatuses 320 or one hinge apparatus 320 may be arranged at a specified interval along the folding axis F. In an embodiment, the electronic device 200 may include a connection module 320-1 disposed between the hinge apparatuses 320. In an embodiment, the connection module 320-1 may be arranged through a combination of at least one gear and/or a combination of at least one link. In a certain embodiment, the connection module 320-1 may be replaced with a hinge apparatus 320. In an embodiment, the electronic device 200 may include a first hinge plate 311 and a second hinge plate 312 connected through at least one hinge apparatus 320. In an embodiment, the first hinge plate 311 may be on the same plane as the first housing 210 in the unfolded state, and the second hinge plate 312 may be on the same plane as the second housing 220 in the unfolded state. According to an embodiment, when the electronic device 200 is in the folded state, the flexible display 230 may be changed into a water drop shape and accommodated in the internal space of the electronic device 200 through at least one hinge apparatus 320 and 320-1. According to an embodiment, in the folded state, the first hinge plate 311 and the second hinge plate 312 may be moved to support at least a portion of the water drop-shaped folding region (e.g., folding region 230C in FIG. 1A) of the flexible display 230, and the first housing 210 and the second housing 220 may be moved to support the unchanged flat portions (e.g., first region 230a and second region 230b in FIG. 1A) of the flexible display 230 in the folded state. Hence, in the folded state, the first hinge plate 311 may be not on the same plane as the first housing 210, and the second hinge plate 312 may be not on the same plane as the second housing 220. According to an embodiment of the disclosure, in the folded state, at least one hinge apparatus 320 and 320-1 may induce the folding region 230c of the flexible display 230 to be changed into a specified shape (e.g., water drop shape). For example, the hinge apparatuses 320 and 320-1 should be designed to rotate about rotation axes (e.g., first rotation axis X1 of the first rotate, second rotation axis X2 of the second rotate, fifth rotation axis X5 of the first rotate link, and sixth rotation axis X6 of the second rotate link) that rotate around a different position from the folding axis F of the flexible display 230, so that the folding region 230c of the flexible display 230 can be changed into a curved shape.

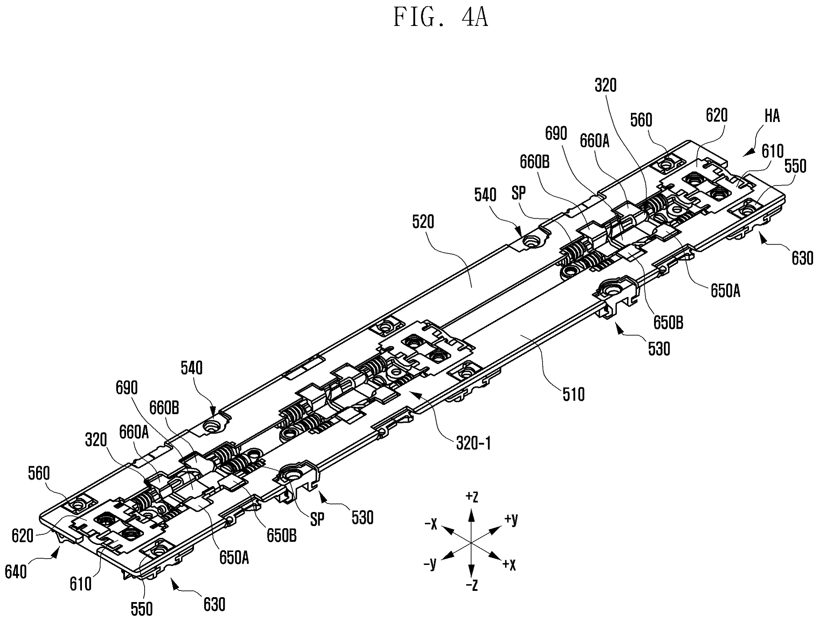

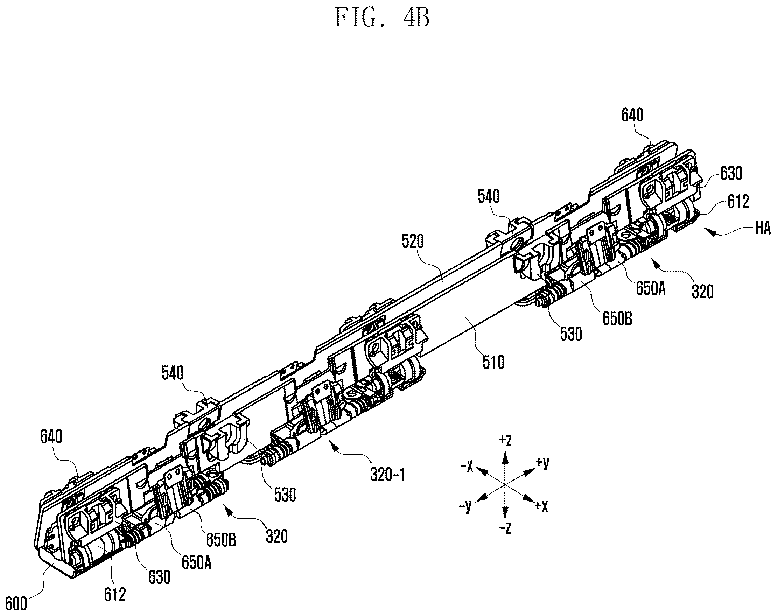

FIG. 4A is a perspective view of a hinge assembly when the electronic device is in the unfolded state according to an embodiment of the disclosure. FIG. 4B is a perspective view of the hinge assembly when the electronic device is in the folded state according to an embodiment of the disclosure.

According to an embodiment, as shown in FIGS. 4A and 4B, the first housing 210 and the second housing 220 may be foldably connected through a hinge assembly HA. The hinge assembly HA may be disposed between the first housing 210 and the second housing 220 to allow folding of the first housing 210 and the second housing 220.

According to an embodiment, the hinge assembly HA may include at least one hinge apparatus 320 and 320-1 coupled to the hinge housing 310, a pair of hinge plates 510 and 520 (e.g., plates 311 and 312 in FIG. 3) coupled to the at least one hinge apparatus 320 and 320-1, and at least one center bar (not shown) disposed between the pair of hinge plates 510 and 520. In an embodiment, the pair of hinge plates 510 and 520 may include a first hinge plate 510 that is on the same plane as the first housing 210, and a second hinge plate 520 that is on the same plane as the second housing 220. In an embodiment, when the electronic device 200 is in the unfolded state, the first hinge plate 510, the second hinge plate 520, and the center bar are on the same plane as the first housing 210 and the second housing 220, thereby supporting the flexible display (e.g., display 230 in FIG. 1A). As the components of the hinge assembly HA described above are illustrative, at least one of the above-described components may be omitted as needed, and it may be possible to configure the hinge assembly HA by adding other components.

According to an embodiment, the at least one hinge apparatus 320 and 320-1 may include hinge plates 510 and 520, and a first hinge apparatus 320 and a third hinge device 320-1 disposed respectively at both ends of the center bar. In an embodiment, multiple hinge apparatuses 320 and 320-1 may be arranged between the first housing 210 and the second housing 220. In an embodiment, one or three or more instances of the at least one hinge apparatus 320 and 320-1 may be arranged at specified intervals. In an embodiment, the at least one hinge apparatus 320 and 320-1 may be at least partially fixed to the first housing 210 and the second housing 220. In an embodiment, the at least one hinge apparatus 320 and 320-1 may be at least partially fixed to the hinge housing 310. In an embodiment, the first hinge plate 510 and the second hinge plate 520 may be fixed to the at least one hinge apparatus 320 and 320-1 through screws S.

In describing the drawings below, the first hinge apparatus 320 among the at least one hinge apparatus 320 and 320-1 is mainly described, but the second hinge apparatus 320-1 may also have substantially the same configuration. In addition, although the assembly structure and operational structure of the first hinge plate 510 combined with the at least one hinge apparatus 320 and 320-1 are mainly described, the assembly structure and operational structure of the at least one hinge apparatus 320 and 320-1 and the second hinge plate 520 may also have substantially the same configuration.

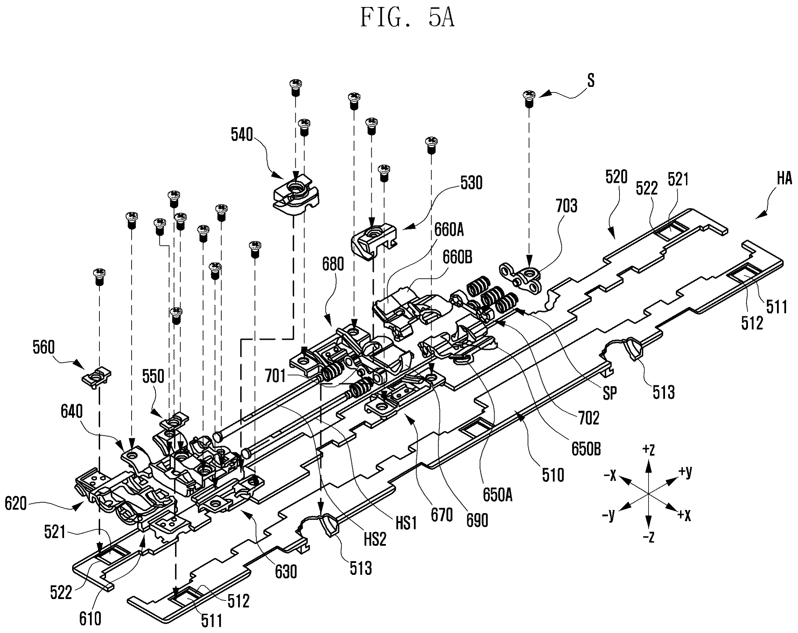

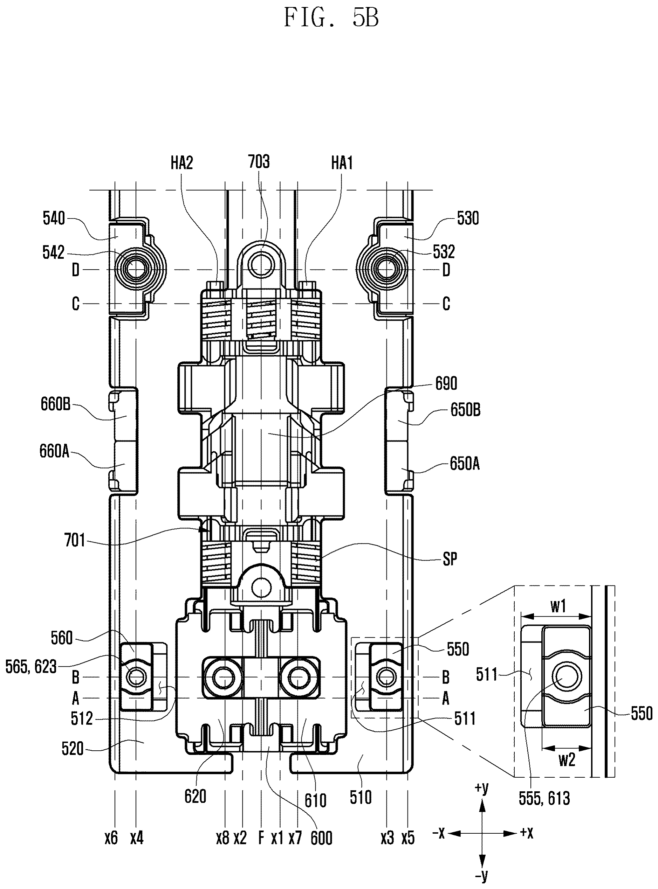

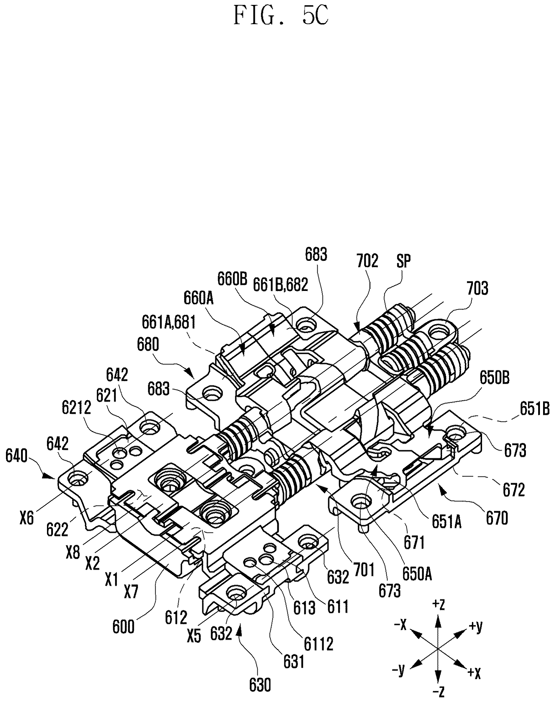

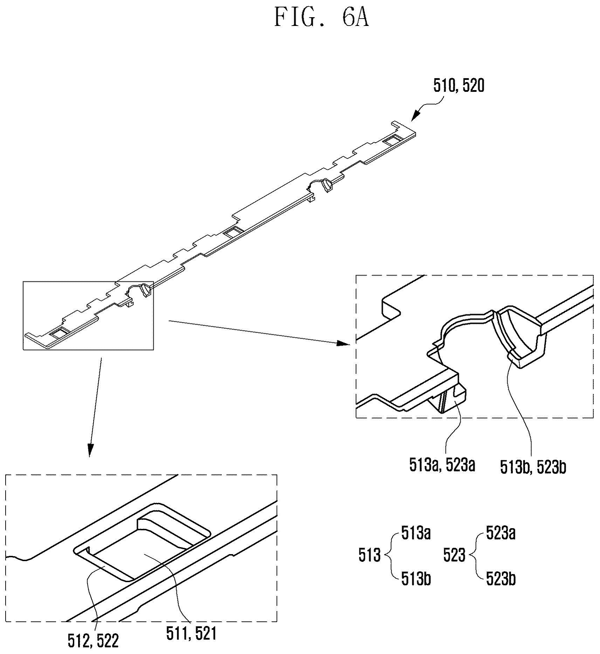

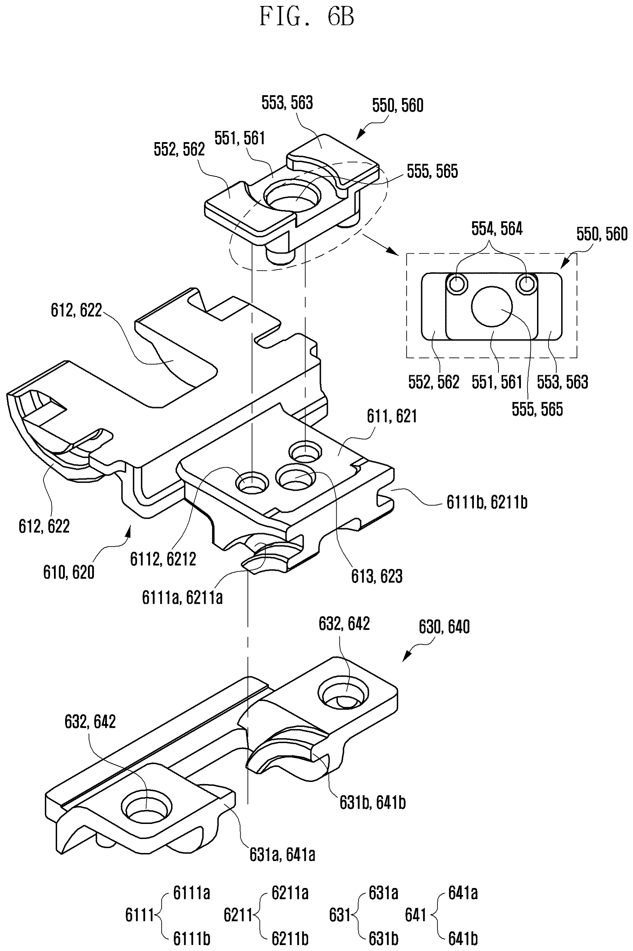

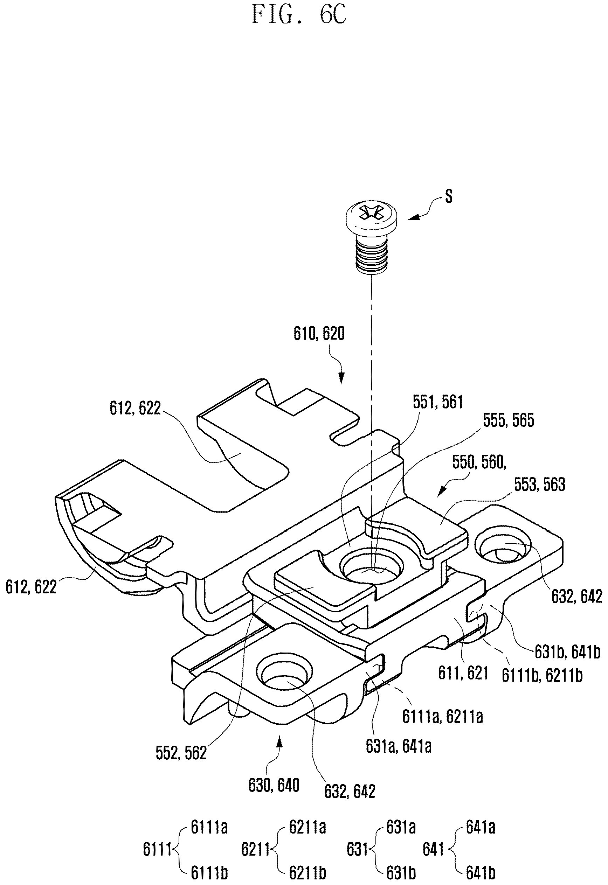

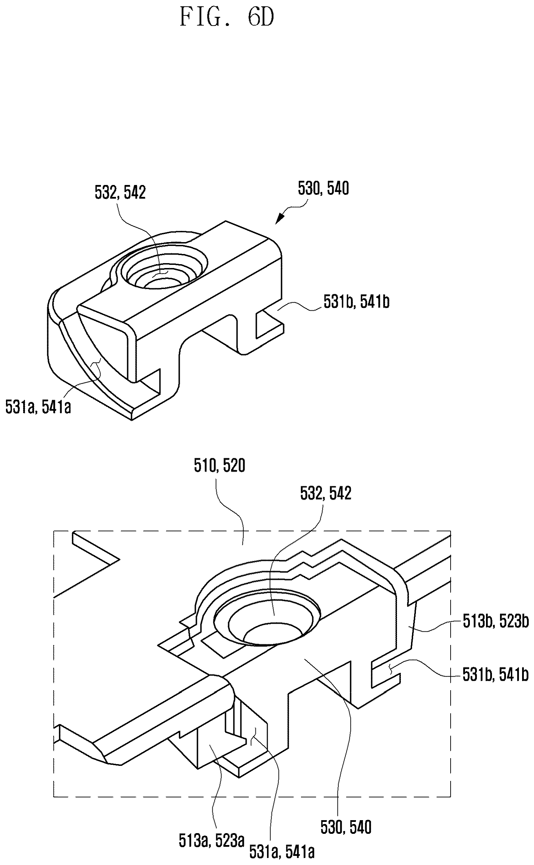

FIG. 5A is an assembled perspective view of the hinge assembly according to an embodiment of the disclosure. FIG. 5B is a front view of the hinge assembly when the electronic device is in the unfolded state according to an embodiment of the disclosure. FIG. 5C is a perspective view of a hinge apparatus according to an embodiment of the disclosure. FIG. 6A is an enlarged view of the opening and the rotation rib of a hinge plate according to an embodiment of the disclosure. FIGS. 6B and 6C are views illustrating a coupling relationship between a rotate link, a rotate, and a fixing member according to an embodiment of the disclosure. FIG. 6D is a view illustrating a coupling relationship between a rotation guide member and a hinge plate according to an embodiment of the disclosure.

According to an embodiment, the hinge apparatus 320 or 320-1 may include a bracket 600 fixed to the hinge housing 310 through a fastening member such as a screw S, a first rotate 610 rotatably disposed on the bracket 600 with respect to a first rotation axis X1, a second rotate 620 rotatably disposed on the bracket 600 with respect to a second rotation axis X2, a first rotation guide member 530 fixed to the first housing 210 to be fastened to the first hinge plate 510, a second rotation guide member 540 fixed to the second housing 220 to be fastened to the second hinge plate 520, a first rotate link 630 rotatably coupled to the first rotate 610 with respect to a fifth rotation axis X5, a second rotate link 640 rotatably coupled to the second rotate 620 with respect to a sixth rotation axis X6, a first arm 650 that rotates about the bracket 600 with respect to a seventh rotation axis X7 through a first shaft HS1, a second arm 660 that rotates about the bracket 600 with respect to an eighth rotation axis X8 through a second shaft HS2, a first arm link 670 that is fixed to the first housing 210 so as to rotate about the bracket 600 with respect to the seventh rotation axis X7 and is movably coupled to the first arm 650, and a second arm link 680 that is fixed to the second housing 220 so as to rotate about the bracket 600 with respect to the eighth rotation axis X8 and is movably coupled to the second arm 660. In an embodiment, the first arm link 670 may be rotatably coupled to the first arm 650 with respect to a ninth rotation axis X9, and the second arm link 680 may be rotatably coupled to the second arm 660 with respect to a tenth rotation axis X10. In the following description, for the convenience of explanation, it is assumed that the first arm link 670 is connected to the first arm 650 so that it can move in a straight line, and the second arm link 680 is connected to the second arm 660 so that it can move in a straight line. As the components of the hinge apparatus 320 or 320-1 described above are illustrative, at least one of the above-described components may be omitted as needed, and it may be possible to configure the hinge apparatus 320 or 320-1 by adding other components.

In an embodiment, the first arm link 670 may be fixed to the first housing 210. For example, a screw S may fix the first arm link 670 to the first housing 210 by sequentially penetrating a first insertion hole 673 formed in the first arm link 670 and an insertion hole (not shown) formed in the first housing 210 in correspondence to the first insertion hole 673 formed in the first arm link 670. In addition, the second arm link 680 may be fixed to the second housing 220. For example, a screw S may fix the second arm link 680 to the second housing 220 by sequentially penetrating a second insertion hole 683 formed in the second arm link 680 and an insertion hole (not shown) formed in the second housing 220 in correspondence to the second insertion hole 683 formed in the second arm link 680.

According to an embodiment, as illustrated in FIG. 5A, the bracket 600 may be the body of the hinge apparatus 320 or 320-1 to which components of the hinge apparatus 320 or 320-1 may be mutually coupled. In an embodiment, the components of the hinge apparatus 320 or 320-1 may be mutually coupled or installed with each other around the bracket 600. In an embodiment, the first rotate 610 and the second rotate 620 may be at least partially fastened to the bracket 600 so as to rotate relative to the bracket 600. In an embodiment, with reference to FIG. 5A, the bracket 600 may include a first coupling portion (not shown) and a second coupling portion (not shown). The first coupling portion and the second coupling portion may be spaced apart from each other. For example, the first coupling portion may be formed on one side with respect to the folding axis F, and the second coupling portion may be formed on the other side with respect to the folding axis F. The first rotate 610 may rotate relative to the bracket 600 by having at least a portion (e.g., first rotation portion 612) fastened to the first coupling portion. The second rotate 620 may rotate relative to the bracket 600 by having at least a portion (e.g., second rotation portion 622) fastened to the first coupling portion. In an embodiment, the bracket 600 may be made of various materials. For example, the bracket 600 may be made of a metal material and a synthetic resin material. In an embodiment, the bracket 600 may be made of a high-rigidity material so as to stably support various components of the hinge apparatus 320 or 320-1.

According to an embodiment, as illustrated in FIGS. 5A and 5B, the first rotate 610 may include a first rotate body 611 and a first rotation portion 612. In an embodiment, at least a portion of the first hinge plate 510 may be disposed on the first rotate body 611. In an embodiment, with reference to FIGS. 5A and 5B, the first hinge plate 510 may be coupled to the first rotate body 611 through the first fixing member 550. In an embodiment, the first hinge plate 510 may move linearly back and forth on the first rotate body 611 relative to the first fixing member 550 while the electronic device 200 is being switched to the folded state or the unfolded state. For example, the first hinge plate 510 may move linearly in a direction away from the folding axis F. In an embodiment, the first rotate 610 may rotate relative to the bracket 600 with respect to the first rotation axis X1 as the first rotation portion 612 is fastened to the first coupling portion of the bracket 600. Likewise, the second rotate 620 may include a second rotate body 621 and a second rotation portion 622. In an embodiment, at least a portion of the second hinge plate 520 may be disposed on the second rotate body 621. In an embodiment, with reference to FIGS. 5A and 5B, the second hinge plate 520 may be coupled to the second rotate body 621 through the second fixing member 560. In an embodiment, the second hinge plate 520 may move linearly back and forth on the second rotate body 621 relative to the second fixing member 560 while the electronic device 200 is being switched to the folded state or the unfolded state. For example, the second hinge plate 520 may move linearly in a direction away from the folding axis F. In an embodiment, the second rotate 620 may rotate relative to the bracket 600 with respect to the second rotation axis X2 as the second rotation portion 622 is fastened to the second coupling portion of the bracket 600.

According to an embodiment, as illustrated in FIG. 5A and FIG. 6D to be described later, the hinge apparatus 320 or 320-1 may include a first rotation guide member 530 fastened to the first hinge plate 510, and a second rotation guide member 540 fastened to the second hinge plate 520. In an embodiment, the first rotation guide member 530 may include a first insertion hole 532 into which a screw S is inserted. The first rotation guide member 530 may be fixed to the first housing 210 as the screw S sequentially penetrates the first insertion hole 532 and the insertion hole (not shown) formed in the first housing 210. In an embodiment, the second rotation guide member 540 may include a second insertion hole 542 into which a screw S is inserted. The second rotation guide member 540 may be fixed to the second housing 220 as the screw S sequentially penetrates the second insertion hole 542 and the insertion hole (not shown) formed in the second housing 220.

In an embodiment, the first rotation guide member 530 may guide the rotation of the first hinge plate 510 so that the first hinge plate 510 rotates relative to the bracket 600 with respect to the third rotation axis X3 different from the first rotation axis X1 of the first rotate 610. Likewise, the second rotation guide member 540 may guide the rotation of the second hinge plate 520 so that the second hinge plate 520 rotates relative to the bracket 600 with respect to the fourth rotation axis X4 different from the second rotation axis X2 of the second rotate 620. In an embodiment, with reference to FIGS. 5A, 6A and 6D, the first rotation guide member 530 may include a curved first rotation rail 531 formed at one end. In an embodiment, the first rotation rail 531 may be a part of a rotation radius formed around the third rotation axis X3. According to an embodiment, multiple instances of the first rotation rail 531 may be formed on the first rotation guide member 530. For example, the first rotation guide member 530 may include a first-first rotation rail 531a formed at one end and a first-second rotation rail 531b formed at the other end. In an embodiment, the first hinge plate 510 may include a curved first rotation rib 513 formed at least in a portion thereof. The first rotation rib 513 may include a first-first rotation rib 513a coupled to the first-first rotation rail 531a, and a first-second rotation rib 513b coupled to the first-second rotation rail 531b. The first hinge plate 510 may rotate relative to the bracket 600 with respect to the third rotation axis X3 as the first rotation rib 513 is coupled to the first rotation rail 531. In addition, the second rotation guide member 540 may include a curved second rotation rail 541 formed at one end. In an embodiment, the second rotation rail 541 may be a part of a rotation radius formed around the fourth rotation axis X4. According to an embodiment, multiple instances of the second rotation rail 541 may be formed on the second rotation guide member 540. For example, the second rotation guide member 540 may include a second-first rotation rail 541a formed at one end, and a second-second rotation rail 541b formed at the other end. The second hinge plate 520 may include a curved second rotation rib 523 formed at least in a portion thereof. The second rotation rib 523 may include a second-first rotation rib 523a coupled to the second-first rotation rail 541a, and a second-second rotation rib 523b coupled to the second-second rotation rail 541b. The second hinge plate 520 may rotate relative to the bracket 600 with respect to the second rotation axis X2 as the second rotation rib 523 is coupled to the first rotation rail 531.

According to an embodiment, as shown in FIGS. 6B and 6C, the first rotate 610 may include a curved first guide slit 6111 formed at one end. In an embodiment, the first guide slit 6111 may include a first-first guide slit 6111a and a first-second guide slit 6111b. The second rotate 620 may include a curved second guide slit 6211 formed at one end. In an embodiment, the second guide slit 6211 may include a second-first guide slit 6211a and a second-second guide slit 6211b. In an embodiment, the first rotate link 630 may be rotatably coupled to the first rotate 610 with respect to the fifth rotation axis X5 as the curved first guide rib 631 formed at at least a portion is coupled to the first guide slit 6111 of the first rotate 610. In an embodiment, the first guide rib 631 may include a first-first guide rib 631a coupled to the first-first guide slit 6111a, and a first-second guide rib 631b coupled to the first-second guide slit 6111b. The second rotate link 640 may be rotatably coupled to the second rotate 620 with respect to the sixth rotation axis X6 as the curved second guide rib 641 formed at at least a portion is coupled to the second guide slit 6211 of the second rotate 620. In an embodiment, the second guide rib 641 may include a second-first guide rib 641a coupled to the second-first guide slit 6211a, and a second-second guide rib 641b coupled to the second-second guide slit 6211b.

In an embodiment, the first rotate link 630 may be coupled to the first rotate 610 and fixed to the first housing 210. For example, a screw S may sequentially penetrate the first insertion hole 632 formed in the first rotate link 630 and the insertion hole (not shown) formed in the first housing 210 in correspondence to the first insertion hole 632 formed in the first rotate link 630, thereby fixing the first rotate link 630 to the first housing 210. The second rotate link 640 may be coupled to the second rotate 620 and fixed to the second housing 220. For example, a screw S may sequentially penetrate the second insertion hole 642 formed in the second rotate link 640 and the insertion hole (not shown) formed in the second housing 220 in correspondence to the second insertion hole 642 formed in the second rotate link 640, thereby fixing the second rotate link 640 to the first housing 210.

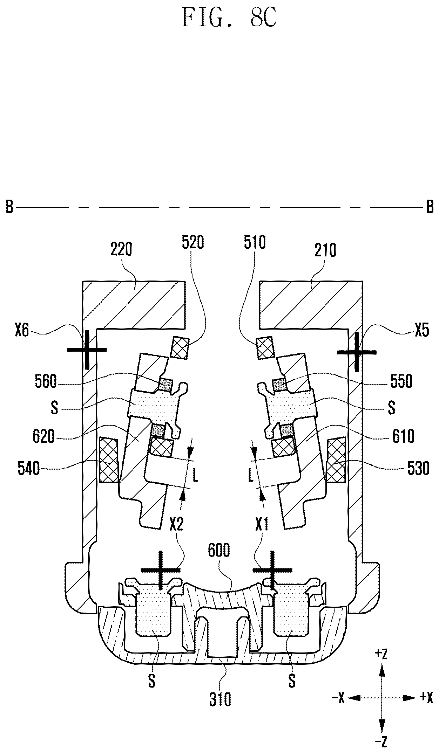

According to an embodiment, in the unfolded state of the electronic device 200, the first housing 210, the second housing 220, the first hinge plate 510, and the second hinge plate 520 may be on the same plane so as to support the flexible display 230. According to an embodiment, while the electronic device 200 is being switched from the unfolded state to the folded state, the first rotate 610 and the second rotate 620 may rotate respectively with respect to the first rotation axis X1 and the second rotation axis X2 as the first housing 210 and the second housing 220 are folded. The first hinge plate 510 may rotate with respect to the third rotation axis X3 through the first rotation guide member 530 fixed to the first housing 210 and supported by the first rotate 610 as the first rotate 610 rotates with respect to the first rotation axis X1. Thereafter, when the angle between the first housing 210 and the second housing 220 is reduced to a specific angle or less, as illustrated in FIG. 8C to be described later, the first rotate 610 may rotate with respect to the fifth rotation axis X5 through the first rotate link 630. The first rotate 610 having rotated with respect to the fifth rotation axis X5 may be not on the same plane as the first housing 210 when the electronic device 200 is in the folded state. For example, the first rotate 610 may be rotated with respect to the fifth rotation axis X5 to be slid into a space formed inside the first housing 210 when the electronic device 200 is in the folded state. The first hinge plate 510 being seated in the first rotate 610 may be rotated with respect to the fifth rotation axis X5 together with the first rotate 610 and be additionally folded in a space (not shown) formed inside the first housing 210 when the electronic device 200 is in the folded state, thereby supporting the folding region (e.g., folding region 230c in FIG. 1A) of the flexible display 230 having been changed into a water drop shape. Likewise, the second hinge plate 520 may be folded or unfolded at the same angle as the first hinge plate 510 at the same time. For example, as the second rotate 620 rotates with respect to the second rotation axis X2, the second hinge plate 520 may be supported by the second rotate 620 and may rotate with respect to the fourth rotation axis X4 through the second rotation guide member 540 fixed to the second housing 220. Thereafter, when the angle between the first housing 210 and the second housing 220 is reduced to a specific angle or less, as illustrated in FIG. 8C to be described later, the second rotate 620 may rotate with respect to the sixth rotation axis X6 through the second rotate link 640. As the second rotate 620 rotates with respect to the sixth rotation axis X6, it may be not on the same plane as the second housing 220 when the electronic device 200 is in the folded state. For example, the second rotate 620 may be rotated with respect to the sixth rotation axis X6 to be slid into a space formed inside the second housing 220 when the electronic device 200 is in the folded state. The second hinge plate 520 being seated in the second rotate 620 may be rotated with respect to the sixth rotation axis X6 together with the second rotate 620 and be additionally folded in a space (not shown) formed inside the second housing 220 when the electronic device 200 is in the folded state, thereby supporting the folding region (e.g., folding region 230c in FIG. 1A) of the flexible display 230 having been changed into a water drop shape.

In an embodiment, with reference to FIGS. 5A and 5B, the rotational axes of the first rotate 610 coupled to the first hinge plate 510 and the first hinge plate 510 may be different from each other. In an embodiment, the first hinge plate 510 may be coupled to the first rotate 610 through the first fixing member 550. Additionally, the first hinge plate 510 may be fixed to the first housing 210 by being fastened to the first rotation guide member 530. The first hinge plate 510 may rotate with respect to the third rotation axis X3 through the first rotation guide member 530, and the first rotate 610 may rotate with respect to the first rotation axis X1. Similarly, the rotational axes of the second rotate 620 coupled to the second hinge plate 520 and the second hinge plate 520 may be different from each other. In an embodiment, the second hinge plate 520 may be coupled to the second rotate 620 through the second fixing member 560. Additionally, the second hinge plate 520 may be fixed to the second housing 220 by being fastened to the second rotation guide member 540. The second hinge plate 520 may rotate with respect to the fourth rotation axis X4 through the second rotation guide member 540, and the second rotate 620 may rotate with respect to the second rotation axis X2. In such a case, a difference in the rotational trajectory may occur due to differences between the rotation axes of the hinge plates 510 and 520 (e.g., third rotation axis X3 and fourth rotation axis X4) and the rotation axes of the rotates 610 and 620 (e.g., first rotation axis X1 and second rotation axis X2). If the difference in rotational trajectory due to the different rotation axes is not compensated for, the flexible display 230 may be compressed whenever the electronic device 200 is switched to the folded state or the unfolded state, which may cause a buckling phenomenon.

According to an embodiment of the disclosure, during the process in which the electronic device 200 is switched to the folded state or the unfolded state, the first hinge plate 510 may perform a linear sliding motion in a direction away from the folding axis F relative to the first fixing member 550 fixed to the first rotate body 611. In addition, the second hinge plate 520 may perform a linear sliding motion in a direction away from the folding axis F relative to the second fixing member 560 fixed to the second rotate body 621. In this case, it is possible to compensate for the difference in the rotational trajectory due to the difference between the rotation axes of the hinge plates 510 and 520 (e.g., third rotation axis X3 and fourth rotation axis X4) and the rotation axes of the rotates 610 and 620 (e.g., first rotation axis X1 and second rotation axis X2). This will be described in detail later.

According to an embodiment, as illustrated in FIGS. 5A to 5C, the bracket 600 may include a first hole (not shown) through which the first shaft HS1 passes, and a second hole (not shown) through which the second shaft HS2 passes. In one embodiment, the first arm 650 fastened to the first shaft HS1 may rotate relative to the bracket 600 with respect to an axis (e.g., seventh rotation axis X7) based on the first shaft HS1. The second arm 660 fastened to the second shaft HS2 may rotate relative to the bracket 600 with respect to an axis (e.g., eighth rotation axis X8) based on the second shaft HS2.

According to an embodiment, the hinge apparatus 320 or 320-1 may include a cam assembly. In an embodiment, with reference to FIGS. 5A and 5C, the cam assembly may include a first cam structure 701, a second cam structure 702, and at least one spring SP disposed between the first cam structure 701 and the second cam structure 702 for pressurizing the first arm 650 and the second arm 660 interlocked with the first cam structure 701 and the second cam structure 702, and the first cam structure 701 and the second cam structure 702, where the first cam structure 701, the second cam structure 702, and the at least one spring SP may be arranged in a manner of being penetrated sequentially by the first shaft HS1 and the second shaft HS2. In an embodiment, the cam assembly may further include a support structure 703 disposed adjacent to the second cam structure 702 to be penetrated by the first shaft HS1 and the second shaft HS2. In an embodiment, the support structure 703 may be omitted. In an embodiment, the first arm 650 may include a first-first arm 650A in which a first-first cam structure (not shown) being cam-coupled to the first cam structure 701 is formed, and a first-second arm 650B in which a first-second cam structure (not shown) being cam-coupled to the second cam structure 702 is formed. In an embodiment, the second arm 660 may include a second-first arm in which a second-first cam structure (not shown) being cam-coupled to the first cam structure 701 is formed, and a second-second arm 650B in which a second-second cam structure (not shown) being cam-coupled to the second cam structure 702 is formed. According to an embodiment, the first arm 650 may be arranged between the first cam structure 701 and the second cam structure 702 so that the first shaft HS1 may penetrate the first hole of the bracket 600, the first cam structure 701, the first-first arm 650A, the first-second arm 650B, and the second cam structure 702 in sequence. The second arm 660 may be arranged between the first cam structure 701 and the second cam structure 702 so that the second shaft HS2 may penetrate the second hole of the bracket 600, the first cam structure 701, the second-first arm 660A, the second-second arm 660B, and the second cam structure 702 in sequence. In one embodiment, the at least one spring SP may be disposed between the bracket 600 and the first cam structure 701 to pressurize the first cam structure 701 toward the first-first arm 650A and the second-first arm 660A. Additionally, the at least one spring SP may be disposed between the second cam structure 702 and the support structure 703 to pressurize the second cam structure 702 toward the first-second arm 650B and the second-second arm 660B.

According to an embodiment, a detent operation and a free stop operation may be required to increase the usability of the electronic device 200. The detent operation may be an operation in which the electronic device 200 maintains the current state in a completely folded state or a completely unfolded state. Free stop may be an operation of maintaining the current state when an external force at a specific level or higher is not applied to the electronic device 200 during the process of transitioning from the folded state to the unfolded state or from the unfolded state to the folded state. The detent operation and the free stop operation may be implemented by engagement between the cam structure formed on the arm (e.g., first-first cam structure, first-second cam structure, second-first cam structure, and second-second cam structure) and the first cam structure 701 and the second cam structure 702. In an embodiment, the first arm 650 may rotate relative to the first shaft HS1 as the electronic device 200 is folded or unfolded, and the first cam structure 701 and the second cam structure 702, which are arranged to move only in the axial direction (e.g., Y-axis direction in FIG. 5C) on the first shaft HS1, may be retracted under the pressure of the springs SP. Hence, the first housing 210 may be provided with a detent force to maintain the electronic device 200 in the folded state or unfolded state, or may be provided with a force capable of maintaining the current state at a specific intermediate angle. Likewise, in an embodiment, the second arm 660 may rotate relative to the second shaft HS2 as the electronic device 200 is folded or unfolded, and the first cam structure 701 and the second cam structure 702, which are arranged to move only in the axial direction (e.g., Y-axis direction in FIG. 5C) on the second shaft HS2, may be retracted under the pressure of the springs SP. Hence, the second housing 220 may be provided with a detent force to maintain the electronic device 200 in the folded state or unfolded state, or may be provided with a force capable of maintaining the current state at a specific intermediate angle.

In an embodiment, with reference to FIGS. 5A and 5C, the hinge apparatus 320 or 320-1 may include an interlocking member 690 disposed between the first arm 650 and the second arm 660 to interlock the operations of the first arm 650 and the second arm 660. Hence, the first housing 210 and the second housing 220 may be folded or unfolded simultaneously at the same angle through the interlocking member 690.

In the above description, it is assumed that the first arm 650 includes the first-first arm 650A and the first-second arm 650B, and the second arm 660 includes the second-first arm 660A and the second-second arm 660B, but this may be illustrative. In an embodiment, the first arm 650 may be a single-component configuration rather than a multi-component configuration, and the second arm 660 may be a single-component configuration rather than a multi-component configuration.

According to an embodiment, as illustrated in FIGS. 5A and 5C, the hinge apparatus 320 or 320-1 may include a first arm link 670 that is linearly movably coupled to the first arm 650 as the first arm 650 rotates relative to the bracket 600 with respect to the seventh rotation axis X7. Additionally, the hinge apparatus 320 or 320-1 may include a second arm link 680 that is linearly movably coupled to the second arm 660 as the second arm 660 rotates relative to the bracket 600 with respect to the eighth rotation axis X8. In an embodiment, the first arm 650 may include first slide slits 651A and 651B. The first arm link 670 may be fixed to the first housing 210 so that the first slide ribs 671 and 672 are fastened to the first slide slits 651A and 651B of the first arm 650. In an embodiment, the first slide slits 651A and 651B may include a first-first slide slit 651A formed on one surface of the first-first arm 650A, and a first-second slide slit 651B formed on one surface of the first-second arm 650B. The first arm link 670 may be coupled to the first arm 650 such that the first-first slide slit 651A and the first-second slide slit 651B are positioned inside. For example, in the first arm link 670, the first-first slide rib 671 extended toward the first-first slide slit 651A located inside may be fastened to the first-first slide slit 651A, and the first-second slide rib 672 extended toward the first-second slide slit 651B located inside may be fastened to the first-second slide slit 651B. Likewise, in an embodiment, the second arm 660 may include second slide slits 661A and 661B. The second arm link 680 may be fixed to the second housing 220 so that the second slide ribs 681 and 682 are fastened to the second slide slits 661A and 661B of the second arm 660. In an embodiment, the second slide slits 661A and 661B may include a second-first slide slit 661A formed on one surface of the second-first arm 660A and a second-second slide slit 661B formed on one surface of the second-second arm 660B. The second arm link 680 may be coupled to the second arm 660 so that the second-first slide slit 661A and the second-second slide slit 661B are positioned inside. For example, in the second arm link 680, the second-first slide rib 681 extended toward the second-first slide slit 661A located inside may be fastened to the second-first slide slit 661A, and the second-second slide rib 682 extended toward the second-second slide slit 661B located inside may be fastened to the second-second slide slit 661B.

In an embodiment, the first arm 650 may be fixed to the first housing 210 through the first arm link 670, and the first rotate 610 may be fixed to the first housing 210 through the first rotate link 630. The first arm 650 may rotate with respect to the seventh rotation axis X7, and the first rotate 610 may rotate with respect to the first rotation axis X1. The second arm 660 may be fixed to the second housing 220 through the second arm link 680, and the second rotate 620 may be fixed to the second housing 220 through the second rotate link 640. The second arm 660 may rotate with respect to the eighth rotation axis X8, and the second rotate 620 may rotate with respect to the second rotation axis X2. Hence, as the first housing 210 and the second housing 220 perform the folding or unfolding operation, the first arm link 670 may move along the first slide slits 651A and 651B formed in the first arm 650, and the second arm link 680 may move along the second slide slits 661A and 661B formed in the second arm 660. Therefore, the difference in the rotational trajectory due to the difference between the axes of the rotates (e.g., first rotation axis X1 and second rotation axis X2) and the axes of the arms (e.g., seventh rotation axis X7 and eighth rotation axis X8) may be compensated for.

According to an embodiment, as illustrated in FIG. 6A, the first hinge plate 510 may include a first opening 511. In an embodiment, the first opening 511 may face the first rotate 610. For example, the first opening 511 may be positioned in the first rotate body 611. In an embodiment, the first hinge plate 510 may be coupled to the first rotate 610 through the first fixing member 550 disposed in the first opening 511. For example, the first fixing member 550 may be fixed to the first rotate body 611 so as to cover at least a portion of the first hinge plate 510. Likewise, the second hinge plate 520 may include a second opening 521. In an embodiment, the second opening 521 may face the second rotate 620. For example, the second opening 521 may be positioned in the second rotate body 621. In an embodiment, the second hinge plate 520 may be coupled to the second rotate 620 through the second fixing member 560 disposed in the second opening 521. For example, the second fixing member 560 may be fixed to the second rotate body 621 so as to cover at least a portion of the second hinge plate 520.

According to an embodiment, as illustrated in FIGS. 6B and 6C, the first hinge plate 510 may include a first catch 512 positioned in the first opening 511. In an embodiment, the first fixing member 550 may be fixed to the first rotate body 611 so that at least a portion thereof covers the first catch 512 of the first hinge plate 510. In one embodiment, the first fixing member 550 may include a body portion 551 positioned in the first opening 511, a first fragment portion 552 extending in one direction from the body portion 551 and being seated on the first catch 512, and a second fragment portion 553 extending from the body portion 551 in a direction opposite to the extension direction of the first fragment portion 552 and being seated on the first catch 512. As the first fragment portion 552 and the second fragment portion 553 of the first fixing member 550 are disposed on the first catch 512, the phenomenon of the first hinge plate 510 being lifted in the Z-axis direction with respect to the first rotate 610 may be prevented or reduced. Likewise, the second hinge plate 520 may include a second catch 522 positioned in the second opening 521. In an embodiment, the second fixing member 560 may be fixed to the second rotate body 621 so that at least a portion thereof covers the second catch 522 of the second hinge plate 520. In an embodiment, the second fixing member 560 may include a body portion 561 positioned in the second opening 521, a first fragment portion 562 extending in one direction from the body portion 561 and being seated on the second catch 522, and a second fragment portion 563 extending from the body portion 561 in the opposite direction to the extension direction of the first fragment portion 562 and being seated on the second catch 522. As the first fragment portion 562 and the second fragment portion 563 of the second fixing member 560 are disposed on the second catch 522, the phenomenon of the second hinge plate 520 being lifted in the Z-axis direction with respect to the second rotate 620 may be prevented or reduced. However, the above-described configuration is illustrative only, and the shape of the fixing members 550 and 560 may be not limited to the above description. The fixing member may be changed into various shapes within the range that may be carried out by a person skilled in the art so as to fix the first hinge plate 510 in the Z-axis direction in FIG. 5C with respect to the first rotate 610 and to be slidable in the X-axis direction on the rotate.

According to an embodiment, as illustrated in FIGS. 6B and 6C, the first fixing member 550 may be coupled to the first rotate body 611 through a screw S. For example, the screw S may fix the first fixing member 550 to the first rotate body 611 by sequentially penetrating the first insertion hole 555 formed in the first fixing member 550 and the first insertion hole 613 formed in the first rotate body 611. In an embodiment, the first fixing member 550 may include at least one first protrusion 554 to ensure ease of assembly as to the first rotate body 611. The first fixing member 550 may be fixed to the first rotate body 611 as the first protrusion 554 is inserted into the first guide groove 6112 formed in the first rotate body 611. Then, as the screw S is fastened to the first fixing member 550, the first fixing member 550 may be fixed to the first rotate body 611. Likewise, the second fixing member 560 may be coupled to the second rotate body 621 through a screw S. For example, the screw S may fix the second fixing member 560 to the second rotate body 621 by sequentially penetrating the second insertion hole 565 formed in the second fixing member 560 and the second insertion hole 623 formed in the second rotate body 621. In an embodiment, the second fixing member 560 may include at least one second protrusion 564 to ensure ease of assembly as to the second rotate body 621. The second fixing member 560 may be fixed to the second rotate body 621 as the second protrusion 564 is inserted into the second guide groove 6212 formed in the second rotate body 621. Then, as the screw S is fastened to the second fixing member 560, the second fixing member 560 may be fixed to the second rotate body 621.

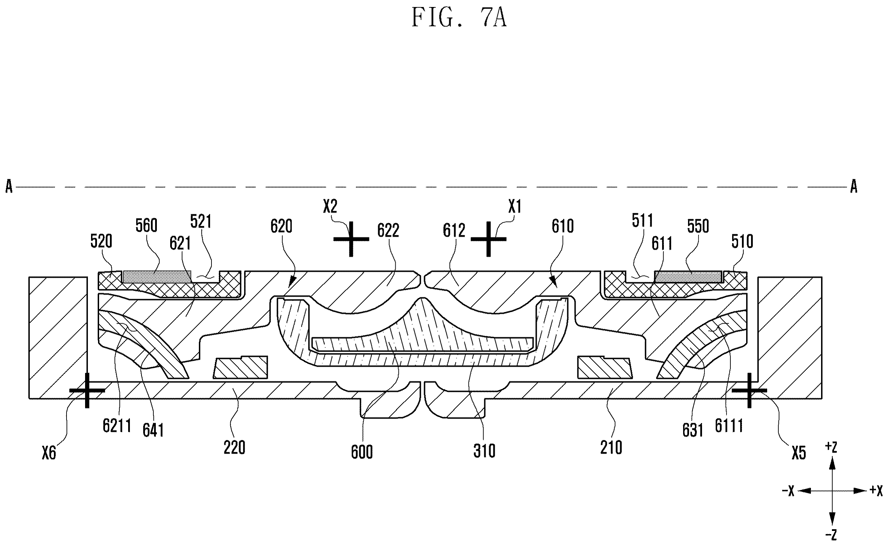

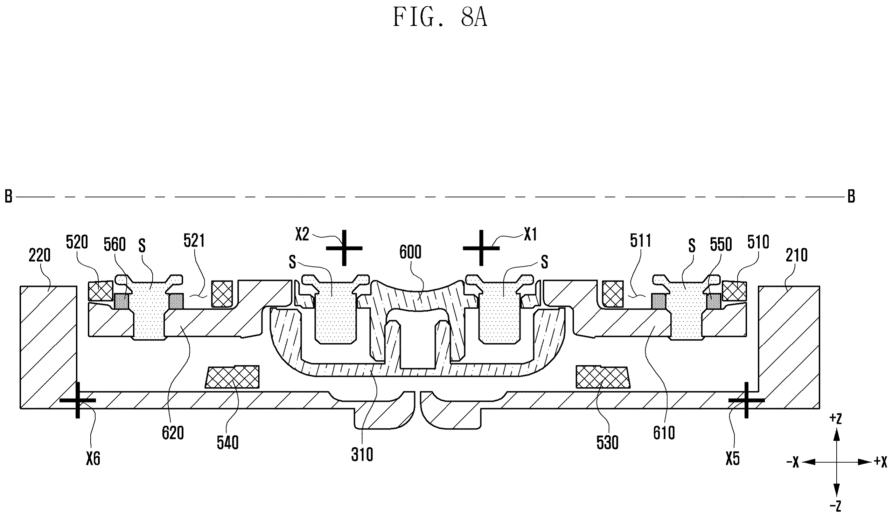

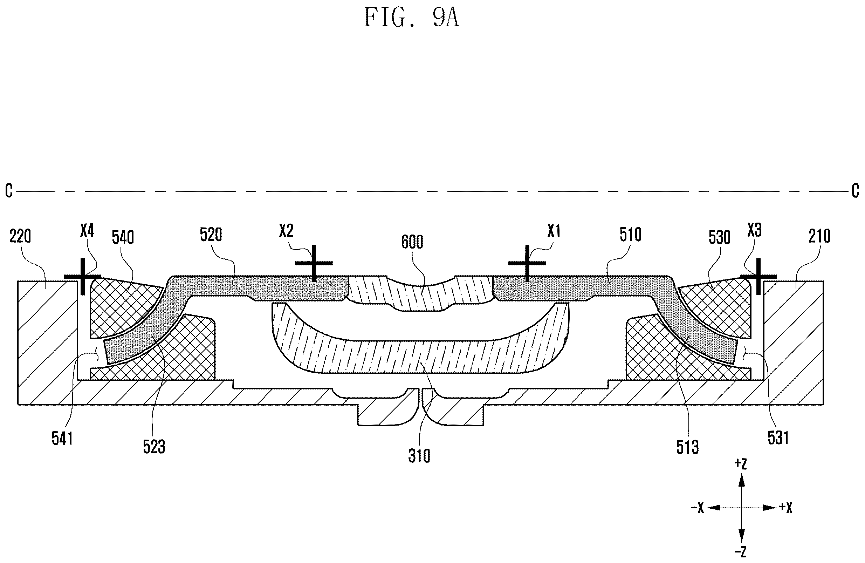

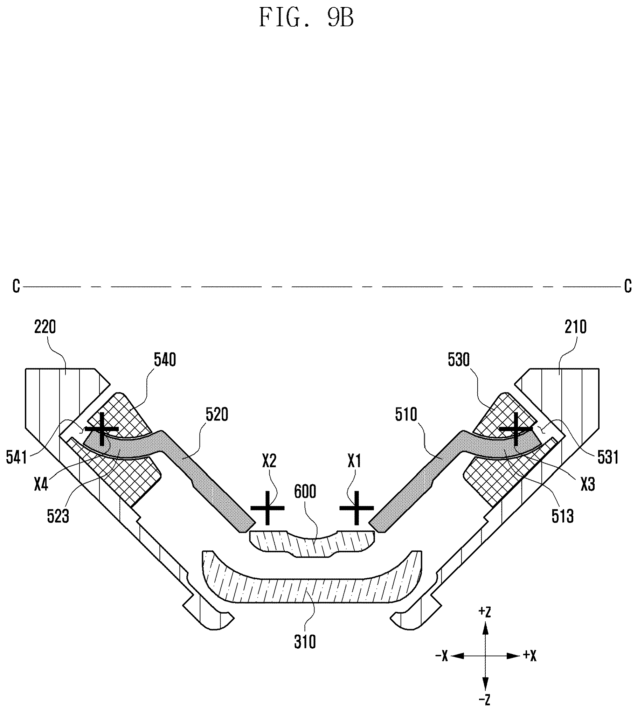

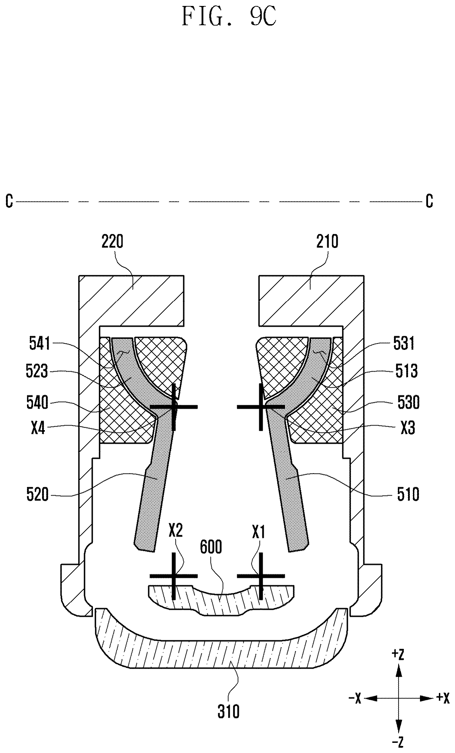

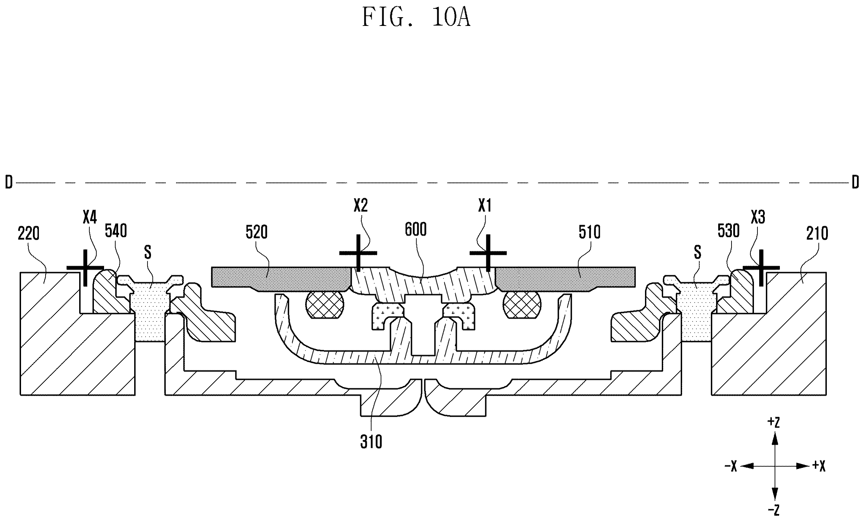

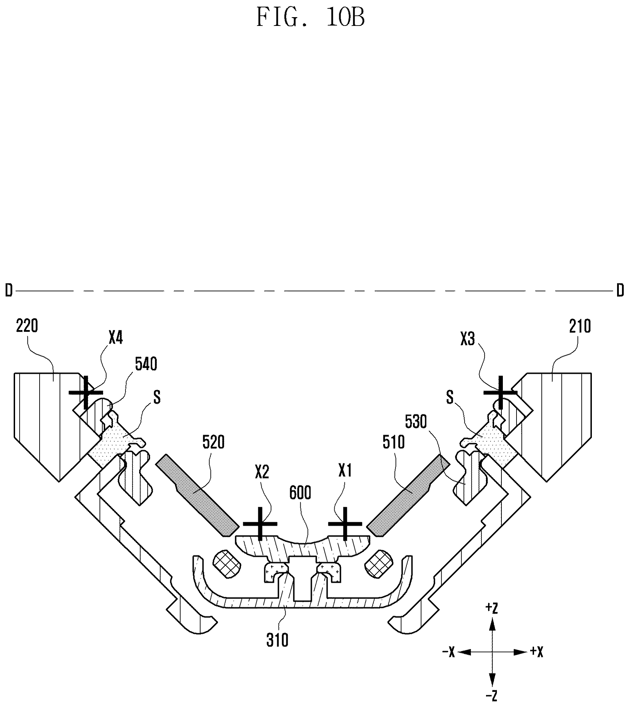

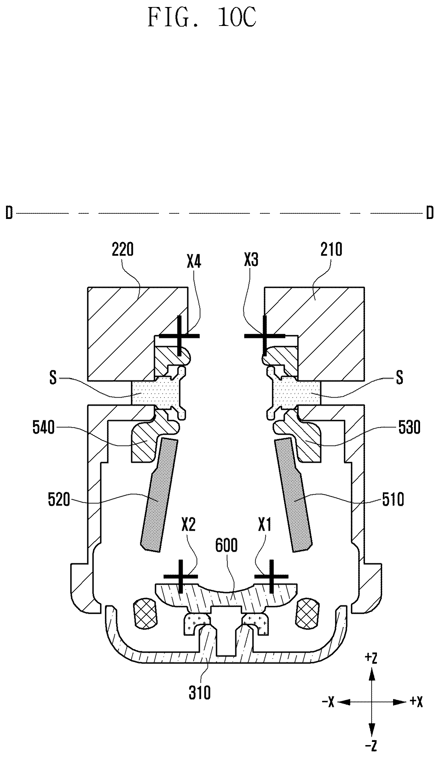

FIGS. 7A to 7C are cross-sectional views of the hinge assembly cut along line A-A in FIG. 5B. FIGS. 8A to 8C are cross-sectional views of the hinge assembly cut along line B-B in FIG. 5B. FIGS. 9A to 9C are cross-sectional views of the hinge assembly cut along line C-C in FIG. 5B. FIGS. 10A to 10C are cross-sectional views of the hinge assembly cut along line D-D in FIG. 5B.

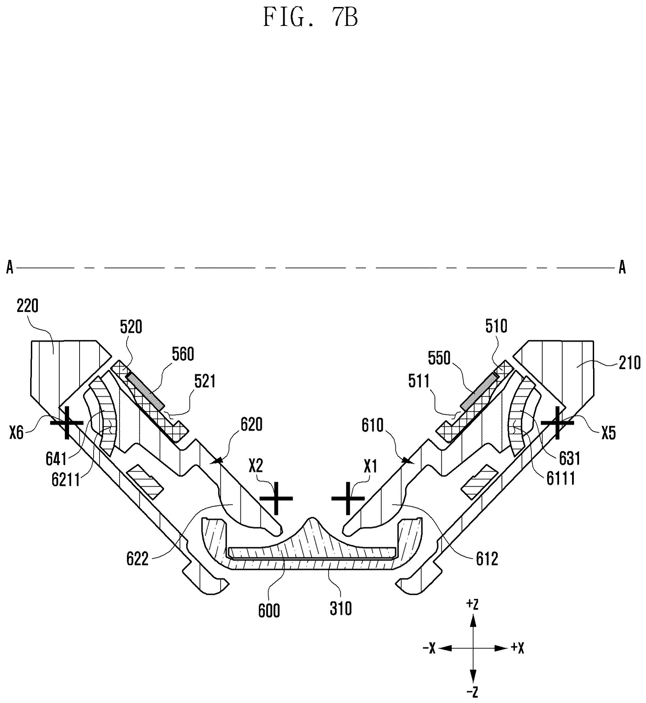

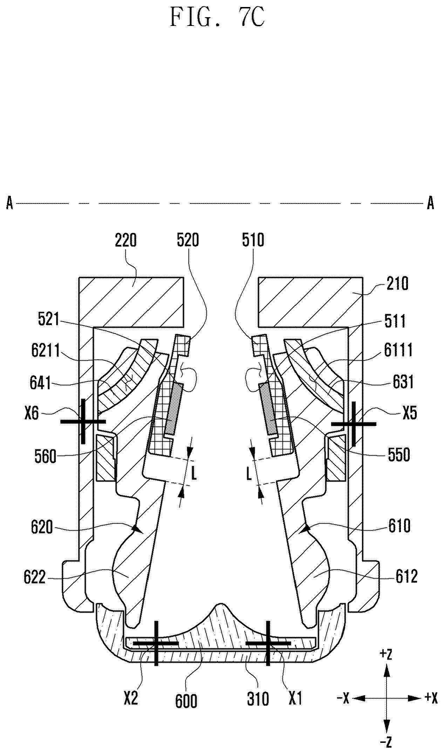

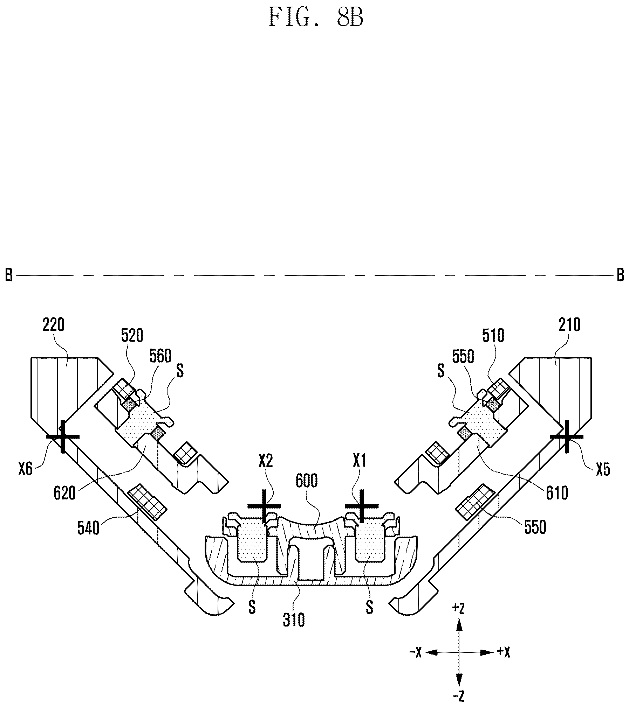

According to an embodiment, in the process of the electronic device 200 transitioning from the unfolded state to the folded state, the first rotate 610 and the second rotate 620 may rotate respectively with respect to the first rotation axis X1 and the second rotation axis X2 as the first housing 210 and the second housing 220 rotate. In an embodiment, with reference to FIGS. 7A to 10C, the relative movement of the hinge plates 510 and 520 with respect to the fixing members 550 and 560 may be identified during the process of the electronic device 200 transitioning from the unfolded state to the folded state. In an embodiment, as the first rotate 610 rotates with respect to the first rotation axis X1, the first hinge plate 510 may rotate with respect to the third rotation axis X3 through the first rotation guide member 530 supported by the first rotate 610 and fixed to the first housing 210. As the second rotate 620 rotates with respect to the second rotation axis X2, the second hinge plate 520 may rotate with respect to the fourth rotation axis X4 through the second rotation guide member 540 supported by the second rotate 620 and fixed to the second housing 220. In an embodiment, as illustrated in FIGS. 7B, 7C, 8B and 8C, when the electronic device 200 is folded at a specific angle or less, the first rotate 610 may rotate with respect to the fifth rotation axis X5 through the first rotate link 630. The first rotate 610 having rotated with respect to the fifth rotation axis X5 may be not on the same plane as the first housing 210 when the electronic device 200 is in the folded state. For example, the first rotate 610 may be rotated with respect to the fifth rotation axis X5 and be slid in a space formed inside the first housing 210 when the electronic device 200 is in the folded state. In addition, the second rotate 620 may rotate with respect to the sixth rotation axis X6 through the second rotate link 640. The second rotate 620 having rotated with respect to the sixth rotation axis X6 may be not on the same plane as the second housing 220 when the electronic device 200 is in the folded state. For example, the second rotate 620 may be rotated with respect to the sixth rotation axis X6 and be slid in a space formed inside the second housing 220 when the electronic device 200 is in the folded state. The first hinge plate 510 being seated in the first rotate 610 may be rotated with respect to the fifth rotation axis X5 together with the first rotate 610 and be additionally folded in a space (not shown) formed inside the first housing 210 when the electronic device 200 is in the folded state, thereby supporting the folding region (e.g., folding region 230c in FIG. 1A) of the flexible display 230 having been changed into a water drop shape. In addition, the second hinge plate 520 being seated in the second rotate 620 may be rotated with respect to the sixth rotation axis X6 together with the second rotate 620 and be additionally folded in a space (not shown) formed inside the second housing 220 when the electronic device 200 is in the folded state, thereby supporting the folding region (e.g., folding region 230c in FIG. 1A) of the flexible display 230 having been changed into a water drop shape.

According to an embodiment, as illustrated in FIGS. 7A to 8C, the rotation axis (e.g., third rotation axis X3) of the first hinge plate 510 may be different from the rotation axis (e.g., first rotation axis X1) of the first rotate 610 coupled to the first hinge plate 510. The rotation axis (e.g., fourth rotation axis X4) of the second hinge plate 520 may be different from the rotation axis (e.g., second rotation axis X2) of the second rotate 620 coupled to the second hinge plate 520. In an embodiment, the hinge plates 510 and 520 may move in a straight line back and forth during the process in which the electronic device 200 is switched to the folded state or the unfolded state so as to compensate for the difference in rotational trajectories that occurs due to the difference between the rotational axes X1 and X2 of the rotates 610 and 620 and the rotational axes X3 and X4 of the hinge plates 510 and 520. In an embodiment, when the electronic device 200 is switched from the unfolded state to the folded state or from the folded state to the unfolded state, the first hinge plate 510 may move in a straight line by a specified distance in a direction perpendicular to the folding axis F (e.g., X-axis direction in FIG. 7A) relative to the first fixing member 550 fixed to the first rotate body 611. In an embodiment, the first hinge plate 510 may move in a direction away from the folding axis F when the electronic device 200 is switched from the unfolded state to the folded state. Additionally, the first hinge plate 510 may move in a direction closer to the folding axis F when the electronic device 200 is switched from the folded state to the unfolded state. For example, the first hinge plate 510 may move in a first direction (e.g., away from the folding axis F) relative to the first fixing member 550 when transitioning from the unfolded state to the folded state, and may move in a second direction (e.g., toward the folding axis F) relative to the first fixing member 550 when transitioning from the folded state to the unfolded state. In an embodiment, when the electronic device 200 is in the folded state or closed state, the first hinge plate 510 may have a maximum movement distance relative to the first fixing member 550. In an embodiment, with reference to FIGS. 7C and 8C, when the electronic device 200 is in the closed state, the first hinge plate 510 may move in the first direction by a maximum movement distance L relative to the first fixing member 550.

Likewise, in an embodiment, when the electronic device 200 is switched from the unfolded state to the folded state or from the folded state to the unfolded state, the second hinge plate 520 may move in a straight line by a specified distance in a direction perpendicular to the folding axis F relative to the second fixing member 560 fixed to the second rotate body 621. In an embodiment, when the electronic device 200 is switched from the unfolded state to the folded state, the second hinge plate 520 may move in a direction away from the folding axis F. Additionally, when the electronic device 200 is switched from the folded state to the unfolded state, the second hinge plate 520 may move in a direction closer to the folding axis F. For example, the second hinge plate 520 may move in a third direction (e.g., away from the folding axis F) relative to the second fixing member 560 when transitioning from the unfolded state to the folded state, and may move in a fourth direction (e.g., toward the folding axis F) relative to the second fixing member 560 when transitioning from the folded state to the unfolded state. Hence, based on the linear movement of the hinge plates 510 and 520 relative to the fixing members 550 and 560, the difference in the rotational trajectory due to the difference between the rotation axes of the hinge plates 510 and 520 (e.g., third rotation axis X3 and fourth rotation axis X4) and the rotation axes of the rotates 610 and 620 (e.g., first rotation axis X1 and second rotation axis X2) can be compensated for. Consequently, the buckling phenomenon of the flexible display 230 that may occur during the transition to the folded state or unfolded state of the electronic device 200 may be reduced. In addition, the hinge plates 510 and 520 may be fastened to the rotates 610 and 620 through separate fixing members 550 and 560 rather than being fastened to the rotates 610 and 620 using pins. Therefore, compared to the fixing method using pins, the contact area between the hinge plates 510 and 520 and the rotates 610 and 620 may be increased, thereby improving the fastening rigidity. In an embodiment, the second hinge plate 520 may have a maximum movement distance relative to the second fixing member 560 when the electronic device 200 is in the folded state or closed state. In an embodiment, with reference to FIGS. 7C and 8C, when the electronic device 200 is in the closed state, the second hinge plate 520 may move in the third direction by a maximum movement distance L relative to the second fixing member 560.

In an embodiment, the linear movement distance of the hinge plates 510 and 520 relative to the fixing members 550 and 560 may be based on the difference in distance between the rotation axes X3 and X4 of the hinge plates 510 and 520 and the rotation axes X1 and X2 of the rotates 610 and 620. In an embodiment, the linear movement distance of the first hinge plate 510 relative to the first fixing member 550 may be based on the difference between the rotation radius of the first rotate 610 with respect to the first rotation axis X1 and the rotation radius of the first hinge plate 510 with respect to the third rotation axis X3. In an embodiment, the linear movement distance of the second hinge plate 520 relative to the second fixing member 560 may be based on the difference between the rotation radius of the second rotate 620 with respect to the second rotation axis X2 and the rotation radius of the second hinge plate 520 with respect to the fourth rotation axis X4.

According to an embodiment, the first rotation guide member 530 may be fixed to the first housing 210 to guide the first hinge plate 510 to rotate with respect to a rotation axis (e.g., third rotation axis X3) different from the first rotate 610. In an embodiment, as the first housing 210 rotates with respect to the first rotation axis X1, the first hinge plate 510 may rotate with respect to the third rotation axis X3 through the first rotation guide member 530 that is supported by the first rotate 610 and relatively fixed to the first housing 210. In an embodiment, with reference to FIGS. 9A to 10C, as the first rotation rib 513 is coupled to the first rotation rail 531, the first hinge plate 510 may rotate relative to the bracket 600 with respect to the third rotation axis X3. In an embodiment, when the electronic device 200 is switched from the unfolded state to the folded state or vice versa, the first rotation rib 513 may move along the curve of the first rotation rail 531. Hence, the first hinge plate 510 may rotate with respect to the third rotation axis X3 through the first rotation guide member 530 to support the folding region (e.g., folding region 230c in FIG. 1A) of the flexible display 230. Likewise, the second rotation guide member 540 may be fixed to the second housing 220 to guide the second hinge plate 520 to rotate with respect to a rotation axis (e.g., fourth rotation axis X4) different from the second rotate 620. In an embodiment, as the second housing 220 rotates with respect to the second rotation axis X2, the second hinge plate 520 may rotate with respect to the fourth rotation axis X4 through the second rotation guide member 540 that is supported by the second rotate 620 and relatively fixed to the second housing 220. In an embodiment, with reference to FIGS. 9A to 10C, the second hinge plate 520 may rotate relative to the bracket 600 with respect to the fourth rotation axis X4 as the second rotation rib 523 is coupled to the second rotation rail 541. In an embodiment, when the electronic device 200 is switched from the unfolded state to the folded state or vice versa, the second rotation rib 523 may move along the curve of the second rotation rail 541. Hence, the second hinge plate 520 may rotate with respect to the fourth rotation axis X4 through the second rotation guide member 540 to support the folding region (e.g., folding region 230c in FIG. 1A) of the flexible display 230.

According to an embodiment, the first opening 511 may be formed to have a sufficient size for allowing the first hinge plate 510 to move relative to the first fixing member 550. In an embodiment, the first opening 511 may be formed to a size that includes the first fixing member 550. For example, with reference to FIG. 5B and FIGS. 7A to FIG. 8C, to allow the first hinge plate 510 to move in the first direction or the second direction relative to the first fixing member 550 when the electronic device 200 is switched to the folded state or the unfolded state, the first opening 511 may be formed so that the width W1 in a direction perpendicular to the folding axis F is longer than the width W2 in a direction perpendicular to the folding axis F of the first fixing member 550. In an embodiment, the width W1 of the first opening 511 may be designed based on the movement distance of the first hinge plate 510. Likewise, the second opening 521 may be formed to have a sufficient size for allowing the second hinge plate 520 to move relative to the second fixing member 560. In an embodiment, the second opening 521 may be formed to a size that includes the second fixing member 560. For example, with reference to FIG. 6A and FIGS. 7A to FIG. 8C, to allow the second hinge plate 520 to move in the third direction or the fourth direction relative to the second fixing member 560 when the electronic device 200 is switched to the folded state or the unfolded state, the second opening 521 may be formed so that the width W1 in a direction perpendicular to the folding axis F is longer than the width W2 in a direction perpendicular to the folding axis F of the second fixing member 560. In an embodiment, the width W1 of the second opening 521 may be designed based on the movement distance of the second hinge plate 520.

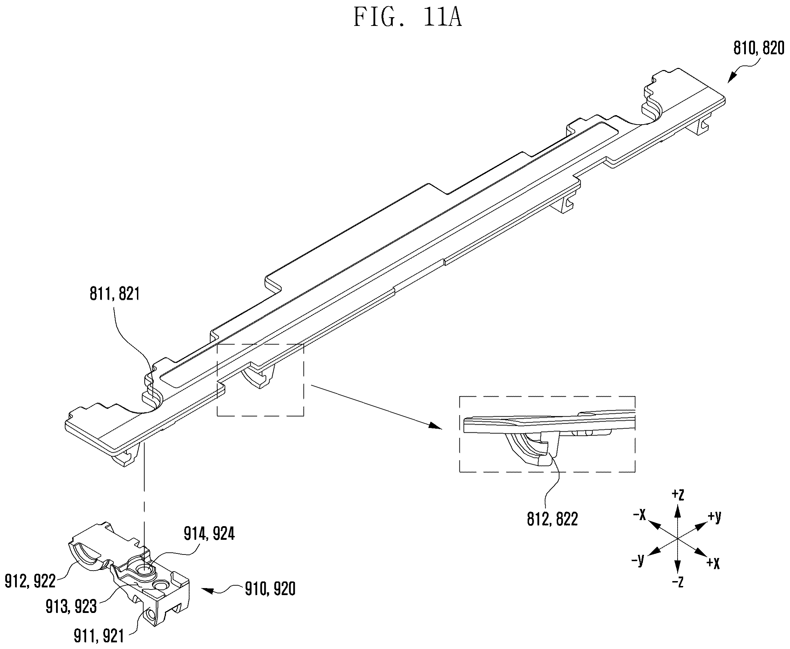

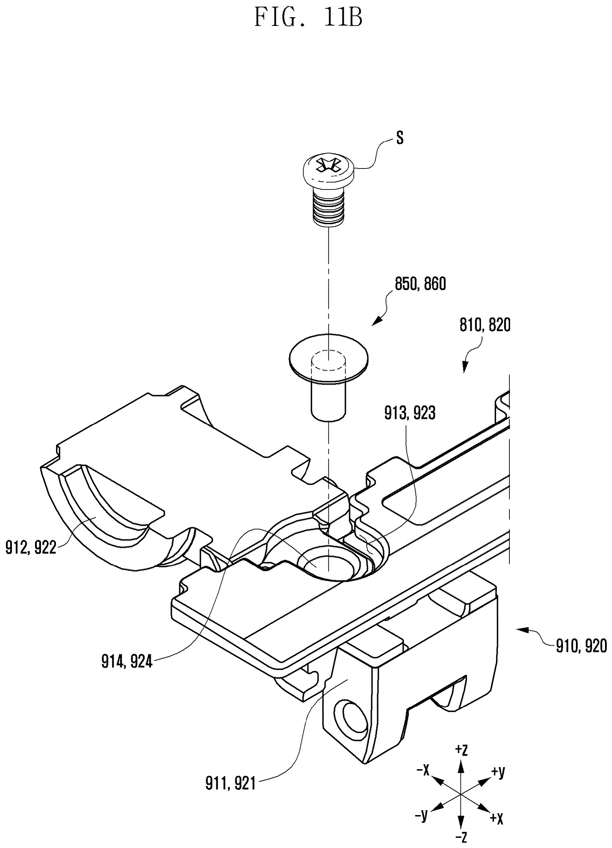

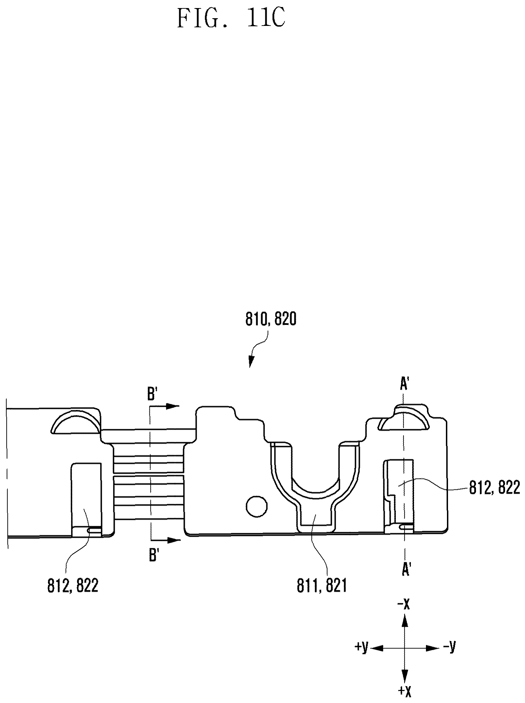

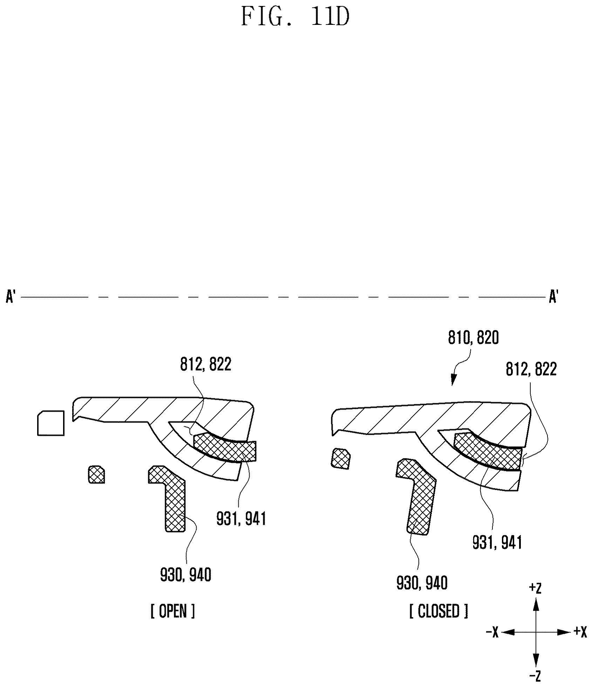

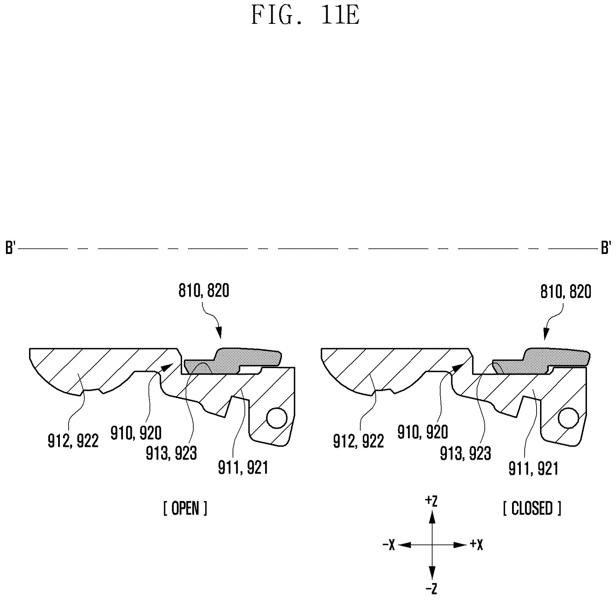

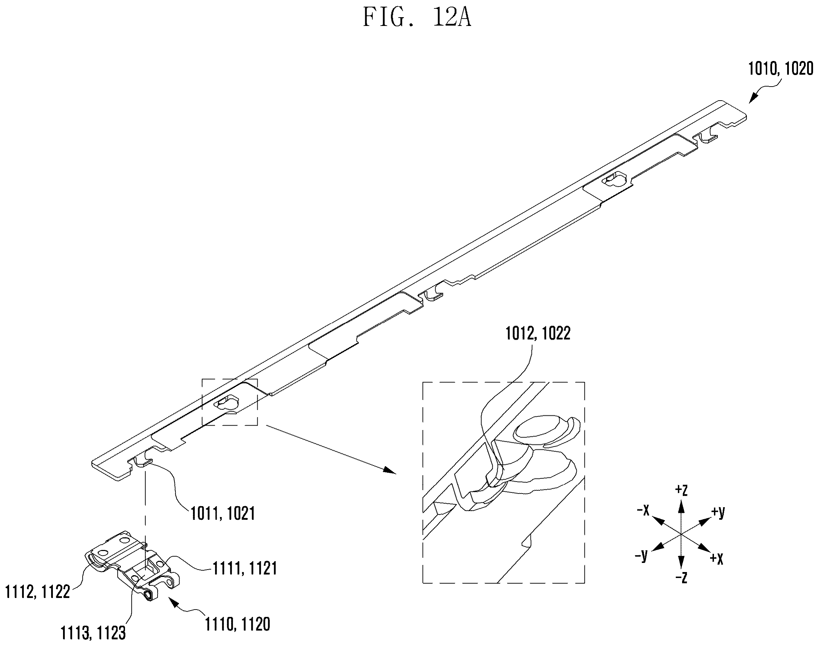

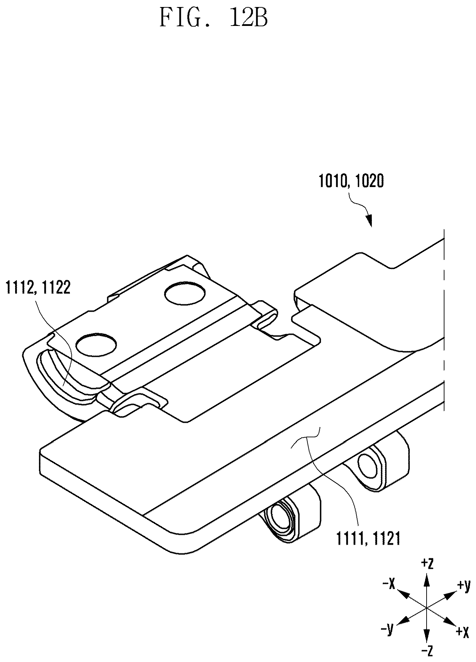

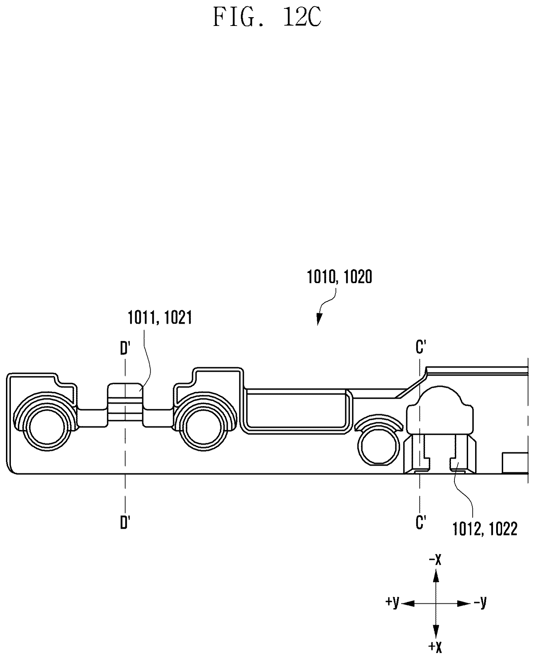

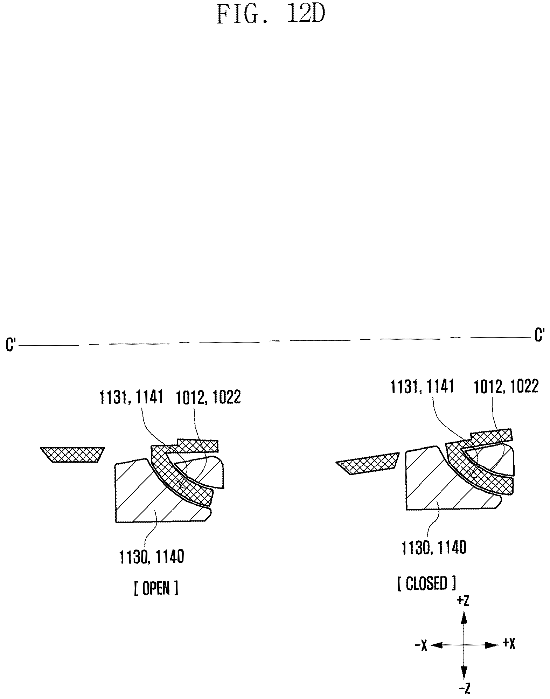

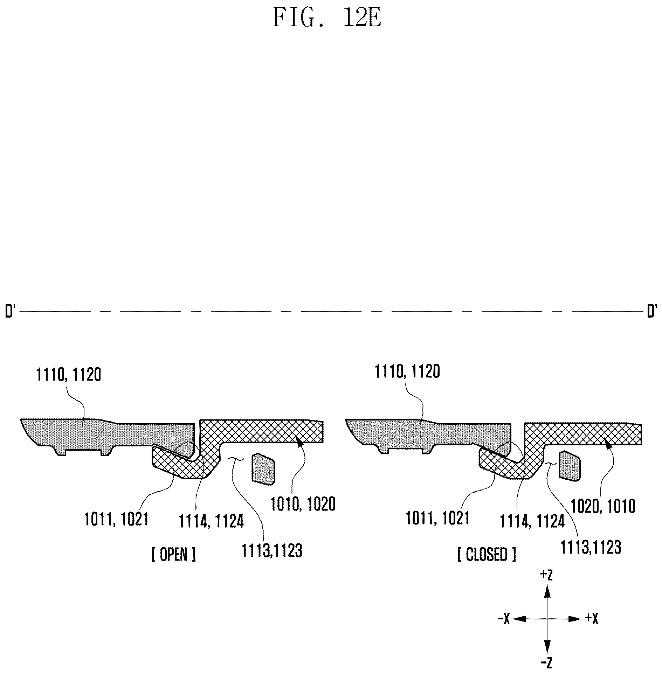

FIGS. 11A and 11B are views illustrating a coupling relationship between a rotate and a hinge plate according to an embodiment of the disclosure. FIG. 11C is a rear view of the hinge plate illustrated in FIG. 11A. FIG. 11D is a cross-sectional view cut along line A'-A' in FIG. 11C. FIG. 11E is a cross-sectional view cut along line B'-B' in FIG. 11C. FIGS. 12A and 12B are views illustrating a coupling relationship between a rotate and a hinge plate according to an embodiment of the disclosure. FIG. 12C is a rear view of the hinge plate illustrated in FIG. 12A. FIG. 12D is a cross-sectional view cut along line C'-C' in FIG. 12C. FIG. 12E is a cross-sectional view cut along line D'-D' in FIG. 12C.

Next, a description will be given of the hinge plates 810 and 820 and the rotates 910 and 920 according to an embodiment. The same terminology will be used for the identical and similar components among the above-described configurations, and the description of the previously described configurations may be omitted.

According to an embodiment, as illustrated in FIGS. 11A and 11B, the first rotate 910 (e.g., first rotate 610 in FIG. 5A) may include a first rotate body 911 and a first rotation portion 912 (e.g., first rotation portion 612 in FIG. 6B). In an embodiment, a first seating groove 913 on which a portion of the first hinge plate 810 (e.g., first hinge plate 510 in FIG. 5A) is seated may be formed in the first rotate body 911. In one embodiment, the first seating groove 913 may be a groove formed on one surface of the first rotate body 911. In an embodiment, as described above in FIG. 5C, the first rotate 910 may rotate relative to the bracket 600 with respect to the first rotation axis X1 as the first rotation portion 912 is fastened to the first coupling portion (not shown) of the bracket 600. Likewise, the second rotate 920 may include a second rotate body 921 and a second rotation portion 922. In an embodiment, a second seating groove 923 on which a portion of the second hinge plate 820 (e.g., second hinge plate 520 in FIG. 5A) is seated may be formed in the second rotate body 921. In an embodiment, the second seating groove 923 may be a groove formed on one surface of the second rotate body 921. In an embodiment, as described above in FIG. 5C, the second rotate 920 may rotate relative to the bracket 600 with respect to the second rotation axis X2 as the second rotation portion 922 is fastened to the second coupling portion (not shown) of the bracket 600.

In an embodiment, with reference to FIGS. 11A, 11B and 11C, the first hinge plate 810 may be seated in the first rotate 910. In an embodiment, the first hinge plate 810 may include a first insertion portion 811. In an embodiment, the first insertion portion 811 may be a portion protruding in one direction (e.g., -Z direction in FIG. 11A) from the first hinge plate 810. In an embodiment, the first insertion portion 811 may be formed in a shape corresponding to the first seating groove 913 formed in the first rotate 910. In an embodiment, the first hinge plate 810 may be disposed on the first rotate 910 so that the first insertion portion 811 is seated in the first seating groove 913. In an embodiment, the first fixing member 850 may be disposed on the first rotate body 911 so as to cover at least a portion of the first insertion portion 811. In an embodiment, the first fixing member 850 may be inserted into a first fixing hole 914 formed in the first rotate body 911 and fixed to the first rotate body 911 through a screw S. Hence, the first hinge plate 810 may be not lifted in the Z-axis direction (e.g., Z-axis direction in FIG. 11A) relative to the first rotate body 911 through the first fixing member 850. In addition, the second hinge plate 820 may be seated on the second rotate 920. In an embodiment, the second hinge plate 820 may include a second insertion portion 821. In an embodiment, the second insertion portion 821 may be a portion protruding in one direction (e.g., -Z direction in FIG. 11A) from the second hinge plate 820. In an embodiment, the second insertion portion 821 may be formed in a shape corresponding to the second seating groove 923 formed in the second rotate 920. In an embodiment, the second hinge plate 820 may be disposed on the second rotate 920 so that the second insertion portion 821 is seated in the second seating groove 923. In an embodiment, the second fixing member 860 may be disposed on the second rotate body 921 so as to cover at least a portion of the second insertion portion 821. In an embodiment, the second fixing member 860 may be inserted into the second fixing hole 924 formed in the second rotate body 921 and fixed to the second rotate body 921 through a screw S. Hence, the second hinge plate 820 may be not lifted in the Z-axis direction (e.g., Z-axis direction in FIG. 11A) relative to the second rotate body 921 through the second fixing member 860.

According to an embodiment, as illustrated in FIGS. 11A and 11C, the first hinge plate 810 may include a curved first rotation rail 812 formed in at least a portion thereof. In an embodiment, with reference to FIG. 11D, the first hinge plate 810 may rotate relative to the bracket 600 with respect to the third rotation axis X3 as the curved first rotation rib 931 formed in the first rotation guide member 930 is coupled to the first rotation rail 812. Additionally, in an embodiment, the second hinge plate 820 may include a curved second rotation rail 822 formed in at least a portion thereof. The second hinge plate 820 may rotate relative to the bracket 600 with respect to the fourth rotation axis X4 as the curved second rotation rib 941 formed in the second rotation guide member 940 is coupled to the second rotation rail 822.

According to an embodiment, the first rotate 910 may be connected to the first rotate link (not shown) (e.g., first rotate link 630 in FIG. 6B) through pin coupling. In an embodiment, the first rotate 910 may rotate with respect to the fifth rotation axis X5 through the first rotate link. The first rotate 910 having rotated with respect to the fifth rotation axis X5 may be not on the same plane as the first housing 210 when the electronic device 200 is in the folded state. For example, the first rotate 910 may be rotated with respect to the fifth rotation axis X5 and may be slid in a space formed inside the first housing 210 when the electronic device 200 is in the folded state. As the first rotate 910 rotates with respect to the first rotation axis X1, the first hinge plate 810 may rotate with respect to the third rotation axis X3 through the first rotation guide member 930 supported by the first rotate 910 and fixed to the first housing 210. Thereafter, the first hinge plate 810 being seated in the first rotate 910 may be rotated with respect to the fifth rotation axis X5 together with the first rotate 910 in a state where the electronic device 200 is folded at a specific angle or less, and be additionally folded in a space (not shown) formed inside the first housing 210 when the electronic device 200 is in the folded state, thereby supporting the folding region (e.g., folding region 230c in FIG. 1A) of the flexible display 230 (e.g., first display 230 in FIG. 1A) having been changed into a water drop shape. In addition, the second rotate 920 may be connected to the second rotate link (not shown) (e.g., second rotate link 640 in FIG. 6B) through pin coupling. In an embodiment, the second rotate 920 may rotate with respect to the sixth rotation axis X6 through the second rotate link. The second rotate 920 having rotated with respect to the sixth rotation axis X6 may be not on the same plane as the second housing 220 when the electronic device 200 is in the folded state. For example, the second rotate 920 may be rotated with respect to the sixth rotation axis X6 and slid in a space formed inside the second housing 220 when the electronic device 200 is in the folded state. As the second rotate 920 rotates with respect to the second rotation axis X2, the second hinge plate 820 may rotate with respect to the fourth rotation axis X4 through the second rotation guide member 940 supported by the second rotate 920 and fixed to the second housing 220. Thereafter, the second hinge plate 820 being seated in the second rotate 920 may be rotated with respect to the sixth rotation axis X6 together with the second rotate 920 in a state where the electronic device 200 is folded at a specific angle or less, and be additionally folded in a space (not shown) formed inside the second housing 220 when the electronic device 200 is in the folded state, thereby supporting the folding region (e.g., folding region 230c in FIG. 1A) of the flexible display 230 having been changed into a water drop shape.

According to an embodiment, as illustrated in FIG. 11E, the first hinge plate 810 may move linearly relative to the first rotate 910. In an embodiment, when the electronic device 200 is switched from the unfolded state to the folded state or from the folded state to the unfolded state, the first hinge plate 810 may move linearly by a specified distance within the first seating groove 913 of the first rotate 910. In an embodiment, the first hinge plate 810 may move in a direction away from the folding axis F when the electronic device 200 is switched from the unfolded state (open state) to the folded state (closed state). Additionally, the first hinge plate 810 may move in a direction closer to the folding axis F when the electronic device 200 is switched from the folded state to the unfolded state. For example, with reference to FIG. 11E, when the electronic device 200 is switched from the unfolded state (open state) to the folded state (closed state), the first hinge plate 810 may move within the first seating groove 913 in a direction away from the first rotation portion 912 of the first rotate 910 (e.g., + X direction in FIG. 11E). Conversely, when the electronic device 200 is switched from the folded state to the unfolded state, the first hinge plate 810 may move within the first seating groove 913 in a direction closer to the first rotation portion 912 of the first rotate 910 (e.g., -X direction in FIG. 11E). Likewise, the second hinge plate 820 may move linearly relative to the second rotate 920. In an embodiment, when the electronic device 200 is switched from the unfolded state to the folded state or from the folded state to the unfolded state, the second hinge plate 820 may move linearly by a specified distance within the second seating groove 923 of the second rotate 920. In an embodiment, when the electronic device 200 is switched from the unfolded state (open state) to the folded state (closed state), the second hinge plate 820 may move in a direction away from the folding axis F. Additionally, when the electronic device 200 is switched from the folded state to the unfolded state, the second hinge plate 820 may move in a direction closer to the folding axis F. For example, with reference to FIG. 11E, when the electronic device 200 is switched from the unfolded state (open state) to the folded state (closed state), the second hinge plate 820 may move within the second seating groove 923 in a direction away from the second rotation portion 922 of the second rotate 920 (e.g., +X direction in FIG. 11E). Conversely, when the electronic device 200 is switched from the folded state to the unfolded state, the second hinge plate 820 may move within the second seating groove 923 in a direction closer to the second rotation portion 922 of the second rotate 920 (e.g., -X direction in FIG. 11e). Hence, based on the linear movement of the hinge plates 810 and 820, the difference in the rotational trajectory due to the difference between the rotation axes of the hinge plates 810 and 820 (e.g., third rotation axis X3 and fourth rotation axis X4) and the rotation axes of the rotates 910 and 920 (e.g., first rotation axis X1 and second rotation axis X2) can be compensated for. Consequently, the buckling phenomenon of the flexible display 230 that may occur during the transition to the folded state or unfolded state of the electronic device 200 may be reduced. In addition, the hinge plates 810 and 820 may be fastened to the rotates 910 and 920 through separate fixing members 850 and 860 rather than being fastened to the rotates 910 and 920 using pins. Therefore, compared to the fixing method using pins, the contact area between the hinge plates 810 and 820 and the rotates 910 and 920 may be increased, thereby improving the fastening rigidity.

FIGS. 12A to 12C are views illustrating a coupling relationship between the rotate and the hinge plate according to an embodiment of the disclosure. FIG. 12D is a cross-sectional view cut along line C'-C' in FIG. 12C. FIG. 12E is a cross-sectional view cut along line D'-D' in FIG. 12C.

Next, a description will be given of the hinge plates 1010 and 1020 and the rotates 1110 and 1120 according to an embodiment. The same terminology will be used for the identical and similar components among the above-described configurations, and the description of the previously described configurations may be omitted.

According to an embodiment, as illustrated in FIGS. 12A and 12B, the first rotate 1110 (e.g., first rotate 610 in FIG. 5A, first rotate 910 in FIG. 11A) may include a first rotate body 1111 and a first rotation portion 1112. In an embodiment, a first insertion hole 1113 into which a portion (e.g., first hook 1011) of the first hinge plate 1010 (e.g., first hinge plate 510 in FIG. 5A, first hinge plate 1010 in FIG. 11A) is inserted may be formed in the first rotate body 1111. In an embodiment, as described above in FIG. 5C, the first rotate 1110 may rotate relative to the bracket 600 with respect to the first rotation axis X1 as the first rotation portion 1112 is fastened to the first coupling portion of the bracket 600. Similarly, the second rotate 1120 (e.g., second rotate 620 in FIG. 5A, second rotate 920 in FIG. 11A) may include a second rotate body 1121 and a second rotation portion 1122. In an embodiment, a second insertion hole 1123 into which a portion (e.g., second hook 1021) of the second hinge plate 1020 (e.g., second hinge plate 520 in FIG. 5A, second hinge plate 1020 in FIG. 11A) is inserted may be formed in the second rotate body 1121. In an embodiment, as described above in FIG. 5C, the second rotate 1120 may rotate relative to the bracket 600 with respect to the second rotation axis X2 as the second rotation portion 1122 is fastened to the second coupling portion of the bracket 600.

In an embodiment, with reference to FIGS. 12A, 12B, 12C and 12E, at least a portion of the first hinge plate 1010 may be seated on the first rotate body 1111. In an embodiment, the first hinge plate 1010 may include a first hook 1011. In an embodiment, the first hook 1011 may be a hook-shaped structure that protrudes in one direction from the first hinge plate 1010. In an embodiment, the first hinge plate 1010 may be disposed on the first rotate body 1111 such that the first hook 1011 is inserted into the first insertion hole 1113 of the first rotate 1110. In an embodiment, with reference to FIG. 12E to be described later, the first hook 1011 may be inserted into the first insertion hole 1113 of the first rotate 1110 and come into contact with a first inclined surface 1114 formed on the rear surface (e.g., surface facing in -Z direction in FIG. 12E) of the first rotate 1110. As the first hook 1011 comes into contact with the first inclined surface 1114 formed on the rear surface of the first rotate 1110, the phenomenon of the first hinge plate 1010 being lifted in the Z-axis direction in FIG. 12B relative to the first rotate 1110 may be prevented or reduced. In an embodiment, the first hook 1011 may slide on the first inclined surface 1114 of the first rotate 1110 when the electronic device 200 is being switched to the folded state or the unfolded state. Likewise, in an embodiment, at least a portion of the second hinge plate 1020 may be seated on the second rotate body 1121. In an embodiment, the second hinge plate 1020 may include a second hook 1021. In an embodiment, the second hook 1021 may be a hook-shaped structure that protrudes in one direction from the second hinge plate 1020. In an embodiment, the second hinge plate 1020 may be disposed on the second rotate body 1121 such that the second hook 1021 is inserted into the second insertion hole 1123 of the second rotate 1120. In an embodiment, with reference to FIG. 12E to be described later, the second hook 1021 may be inserted into the second insertion hole 1123 of the first rotate 1110 and come into contact with a second inclined surface 1124 formed on one surface of the second rotate 1120. As the second hook 1021 comes into contact with the second inclined surface 1124 formed on the rear surface (e.g., surface facing in -Z direction in FIG. 12E) of the second rotate 1120, the phenomenon of the second hinge plate 1020 being lifted in the Z-axis direction in FIG. 12B relative to the second rotate 1120 may be prevented or reduced. In an embodiment, the second hook 1021 may slide on the second inclined surface 1124 of the second rotate 1120 when the electronic device 200 is being switched to the folded state or the unfolded state.

According to an embodiment, as illustrated in FIGS. 12A and 12C, the first hinge plate 1010 may include a curved first rotation rib 1012 formed at at least a portion thereof. In an embodiment, with reference to FIG. 12D, the first hinge plate 1010 may rotate relative to the bracket 600 with respect to the third rotation axis X3 as the first rotation rib 1012 is coupled to the curved first rotation rail 1131 formed in the first rotation guide member 1130. Additionally, in an embodiment, the second hinge plate 1020 may include a curved second rotation rib 1022 formed at at least a portion thereof. The second hinge plate 1020 may rotate relative to the bracket 600 with respect to the fourth rotation axis X4 as the second rotation rib 1022 is coupled to the curved second rotation rail 1141 formed in the second rotation guide member 1140.

According to an embodiment, the first rotate 1110 may be connected to the first rotate link (not shown) (e.g., first rotate link 630 in FIG. 6B) through pin coupling. In an embodiment, the first rotate 1110 may rotate with respect to the fifth rotation axis X5 through the first rotate link. The first rotate 1110 having rotated with respect to the fifth rotation axis X5 may be not on the same plane as the first housing 210 when the electronic device 200 is in the folded state. For example, the first rotate 1110 may be rotated with respect to the fifth rotation axis X5 and may be slid in a space formed inside the first housing 210 when the electronic device 200 is in the folded state. As the first rotate 1110 rotates with respect to the first rotation axis X1, the first hinge plate 1010 may rotate with respect to the third rotation axis X3 through the first rotation guide member 1130 supported by the first rotate 1110 and fixed to the first housing 210. Thereafter, the first hinge plate 1010 being seated in the first rotate 1110 may be rotated with respect to the fifth rotation axis X5 together with the first rotate 1110 in a state where the electronic device 200 is folded at a specific angle or less, and be additionally folded in a space (not shown) formed inside the first housing 210 when the electronic device 200 is in the folded state, thereby supporting the folding region (e.g., folding region 230c in FIG. 1A) of the flexible display 230 (e.g., first display 230 in FIG. 1A) having been changed into a water drop shape. In addition, the second rotate 1120 may be connected to the second rotate link (not shown) (e.g., second rotate link 640 in FIG. 6B) through pin coupling. In an embodiment, the second rotate 1120 may rotate with respect to the sixth rotation axis X6 through the second rotate link. The second rotate 1120 having rotated with respect to the sixth rotation axis X6 may be not on the same plane as the second housing 220 when the electronic device 200 is in the folded state. For example, the second rotate 1120 may be rotated with respect to the sixth rotation axis X6 and slid in a space formed inside the second housing 220 when the electronic device 200 is in the folded state. As the second rotate 1120 rotates with respect to the second rotation axis X2, the second hinge plate 1020 may rotate with respect to the fourth rotation axis X4 through the second rotation guide member 1140 supported by the second rotate 1120 and fixed to the second housing 220. Thereafter, the second hinge plate 1020 being seated in the second rotate 1120 may be rotated with respect to the sixth rotation axis X6 together with the second rotate 1120 in a state where the electronic device 200 is folded at a specific angle or less, and be additionally folded in a space (not shown) formed inside the second housing 220 when the electronic device 200 is in the folded state, thereby supporting the folding region (e.g., folding region 230c in FIG. 1A) of the flexible display 230 having been changed into a water drop shape.

According to an embodiment, as illustrated in FIG. 12E, the first hinge plate 1010 may move linearly relative to the first rotate 1110. In an embodiment, when the electronic device 200 is switched from the unfolded state to the folded state or from the folded state to the unfolded state, the first hinge plate 1010 may move linearly by a specified distance on the first rotate body 1111 of the first rotate 1110. In an embodiment, the first hinge plate 1010 may move in a direction away from the folding axis F when the electronic device 200 is switched from the unfolded state (open state) to the folded state (closed state). Additionally, the first hinge plate 1010 may move in a direction closer to the folding axis F when the electronic device 200 is switched from the folded state to the unfolded state. In an embodiment, the linear movement of the first rotate 1110 may be guided through the first hook 1011. In an embodiment, the first hook 1011 may be inserted into the first insertion hole 1113 of the first rotate 1110 and come into contact with the first inclined surface 1114 formed on one surface of the first rotate 1110. The first hook 1011 may slide on the first inclined surface 1114 of the first rotate 1110 when the electronic device 200 is being switched to the folded state or the unfolded state. In an embodiment, with reference to FIG. 11E, when the electronic device 200 is switched from the unfolded state (open state) to the folded state (closed state), the first hinge plate 1010 may move linearly on the first rotate body 1111 in a direction away from the first rotation portion 1112 of the first rotate 1110 (e.g., +X direction in FIG. 12E). Conversely, when the electronic device 200 is switched from the folded state (closed state) to the unfolded state (open state), the first hinge plate 1010 may move linearly on the first rotate body 1111 in a direction closer to the first rotation portion 1112 of the first rotate 1110 (e.g., -X direction in FIG. 12E). Likewise, the second hinge plate 1020 may move linearly relative to the second rotate 1120. In an embodiment, when the electronic device 200 is switched from the unfolded state to the folded state or from the folded state to the unfolded state, the second hinge plate 1020 may move linearly by a specified distance on the second rotate body 1121 of the second rotate 1120. In an embodiment, the second hinge plate 1020 may move in a direction away from the folding axis F when the electronic device 200 is switched from the unfolded state to the folded state. Additionally, the second hinge plate 1020 may move in a direction closer to the folding axis F when the electronic device 200 is switched from the folded state to the unfolded state. In an embodiment, the linear movement of the second rotate 1120 may be guided through the second hook 1021. In an embodiment, the second hook 1021 may be inserted into the second insertion hole 1123 of the second rotate 1120 and come into contact with the second inclined surface 1124 formed on one surface of the second rotate 1120. The second hook 1021 may slide on the second inclined surface 1124 of the second rotate 1120 when the electronic device 200 is being switched to the folded state or the unfolded state. In an embodiment, with reference to FIG. 11E, when the electronic device 200 is switched from the unfolded state (open state) to the folded state (closed state), the second hinge plate 1020 may move linearly on the second rotate body 1121 in a direction away from the second rotation portion 1122 of the second rotate 1120 (e.g., +X direction in FIG. 12E). Conversely, when the electronic device 200 is switched from the folded state (closed state) to the unfolded state (open state), the second hinge plate 1020 may move linearly on the second rotate body 1121 in a direction closer to the second rotation portion 1122 of the second rotate 1120 (e.g., -X direction in FIG. 12E). Hence, based on the linear movement of the hinge plates 1010 and 1020, the difference in the rotational trajectory due to the difference between the rotation axes of the hinge plates 1010 and 1020 (e.g., third rotation axis X3 and fourth rotation axis X4) and the rotation axes of the rotates 1110 and 1120 (e.g., first rotation axis X1 and second rotation axis X2) can be compensated for. Consequently, the buckling phenomenon of the flexible display 230 that may occur during the transition to the folded state or unfolded state of the electronic device 200 may be reduced. In addition, the hinge plates 1010 and 1020 may be fastened to the rotates 1110 and 1120 through the hooks 1011 and 1021 rather than being fastened to the rotates 1110 and 1120 using pins. Therefore, compared to the fixing method using pins, the contact area between the hinge plates 1010 and 1020 and the rotates 1110 and 1120 may be increased, thereby improving the fastening rigidity.

An electronic device 200 according to an embodiment of the disclosure may include a first housing 210, a second housing 220, and a hinge apparatus 320, 320-1 or HA that foldably connects the first housing and the second housing with respect to a folding axis F, wherein the hinge apparatus may include a bracket 600, a first rotate 610, 910 or 1110 that is fastened to the bracket and rotates relative to the bracket with respect to a first rotation axis X1, a second rotate 620, 920 or 1120 that is fastened to the bracket and rotates relative to the bracket with respect to a second rotation axis X2, a first rotation guide member 530, 930 or 1130 fixed to the first housing, a second rotation guide member 540, 940 or 1140 fixed to the second housing, a first hinge plate 510, 810 or 1010 that is arranged on the first rotate to be movable relative to the folding axis and rotates relative to the first rotation guide member with respect to a third rotation axis, and a second hinge plate 520, 820 or 1020 that is arranged on the second rotate to be movable relative to the folding axis and rotates relative to the second rotation guide member with respect to a fourth rotation axis.

In addition, the first hinge plate and the second hinge plate may move in a direction away from the folding axis when the electronic device is switched from the unfolded state to the folded state, and the first hinge plate and the second hinge plate may move in a direction closer to the folding axis when the electronic device is switched from the folded state to the unfolded state.

In addition, the first hinge plate and the second hinge plate may move in a direction perpendicular to the folding axis when the electronic device is switched from the unfolded state to the folded state or from the folded state to the unfolded state.

In addition, the hinge apparatus may include a first opening 511 formed in the first hinge plate and having at least a portion facing the first rotate, a second opening 521 formed in the second hinge plate and having at least a portion facing the second rotate, a first fixing member 550 having at least a portion positioned in the first opening and fixed to the first rotate, and a second fixing member 560 having at least a portion positioned in the second opening and fixed to the second rotate, wherein the first hinge plate may move by a specified linear distance relative to the first fixing member as it rotates relative to the bracket with respect to the third rotation axis, and wherein the second hinge plate may move by a specified linear distance relative to the second fixing member as it rotates relative to the bracket with respect to the fourth rotation axis.

In addition, the hinge apparatus may include a first rotation rail 531 formed on the first rotation guide member, a second rotation rail 541 formed on the second rotation guide member, a first rotation rib 513 formed on the first hinge plate and fastened to the first rotation rail, and a second rotation rib 523 formed on the second hinge plate and fastened to the second rotation rail.

In addition, the hinge apparatus may include a first rotate link 630 rotatably coupled to the first rotate with respect to a fifth rotation axis X5 and fixed to the first housing, and a second rotate link 640 rotatably coupled to the second rotate with respect to a sixth rotation axis X6 and fixed to the second housing.

In addition, the first hinge plate may move in a first direction relative to the first fixing member when the electronic device is switched from the unfolded state to the folded state, and may move in a second direction relative to the first fixing member when the electronic device is switched from the folded state to the unfolded state; and the second hinge plate may move in a third direction relative to the second fixing member when the electronic device is switched from the unfolded state to the folded state, and may move in a fourth direction relative to the second fixing member when the electronic device is switched from the folded state to the unfolded state.

In addition, the linear distance of the first hinge plate relative to the first fixing member may be based on the difference between the rotation radius of the first rotate with respect to the first rotation axis and the rotation radius of the first hinge plate with respect to the third rotation axis; and the linear distance of the second hinge plate relative to the second fixing member may be based on the difference between the rotation radius of the second rotate with respect to the second rotation axis and the rotation radius of the second hinge plate with respect to the fourth rotation axis.

In addition, the first opening may be formed such that the width W1 in a direction perpendicular to the folding axis is longer than the width W2 in a direction perpendicular to the folding axis of the first fixing member,

The second opening may be formed such that the width W1 in a direction perpendicular to the folding axis is longer than the width W2 in a direction perpendicular to the folding axis of the second fixing member.

In addition, the first hinge plate may include a first catch 512 on which at least a portion of the first fixing member is seated, and positioned in the first opening; and the second hinge plate may include a second catch 522 on which at least a portion of the second fixing member is seated, and positioned in the second opening.

In addition, the first fixing member may include a body portion 551 positioned in the first opening, a first fragment portion 552 extending in one direction from the body portion and being seated on the first catch, and a second fragment portion 553 extending in an opposite direction to the first fragment portion relative to the body portion and being seated on the first catch; and the second fixing member may include a body portion 561 positioned in the second opening, a first fragment portion 562 extending in one direction from the body portion and being seated on the first catch, and a second fragment portion 563 extending in an opposite direction to the first fragment portion relative to the body portion and being seated on the second catch.

In addition, the first rotate may include at least one first guide groove 6112, the first fixing member may include a first protrusion 554 inserted into the first guide groove formed in the first rotate, the second rotate may include at least one second guide groove 6212, and the second fixing member may include a second protrusion 564 inserted into the second guide groove formed in the second rotate.

In addition, the hinge apparatus may include a first seating groove 913 formed in the first rotate, a second seating groove 923 formed in the second rotate, a first insertion portion 811 protruding from one surface of the first hinge plate and being seated in the first seating groove, and a second insertion portion 821 protruding from one surface of the second hinge plate and being seated in the second seating groove; for the first hinge plate, the first insertion portion may move linearly within the first seating groove in a direction away from the folding axis when the electronic device is switched from the unfolded state to the folded state, and the first insertion portion may move linearly within the first seating groove in a direction closer to the folding axis when the electronic device is switched from the folded state to the unfolded state; and for the second hinge plate, the second insertion portion may move linearly within the second seating groove in a direction away from the folding axis when the electronic device is switched from the unfolded state to the folded state, and the second insertion portion may move linearly within the second seating groove in a direction closer to the folding axis when the electronic device is switched from the folded state to the unfolded state.

In addition, the hinge apparatus may include a first insertion hole 1113 formed in the first rotate, a second insertion hole 1123 formed in the second rotate, a first inclined surface 1114 formed on one surface of the first rotate, a second inclined surface 1124 formed on one surface of the second rotate, a first hook 1011 protruding from one surface of the first hinge plate and having at least a portion inserted into the first insertion hole and in contact with the first inclined surface, and a second hook 1021 protruding from one surface of the second hinge plate and having at least a portion inserted into the second insertion hole and in contact with the second inclined surface; the first hinge plate may move linearly relative to the first rotate in a direction away from the folding axis when the electronic device is switched from the unfolded state to the folded state, and may move in a direction closer to the folding axis when the electronic device is switched from the folded state to the unfolded state; and the second hinge plate may move linearly relative to the second rotate in a direction away from the folding axis when the electronic device is switched from the unfolded state to the folded state, and may move in a direction closer to the folding axis when the electronic device is switched from the folded state to the unfolded state.

In addition, the electronic device may further include a flexible display module 230 supported by the first hinge plate and the second hinge plate, wherein the folding region 230c of the flexible display may be changed into a water drop shape when the electronic device is in the folded state.

In addition, the hinge apparatus may include a first arm 650 that rotates relative to the bracket with respect to a seventh rotation axis X7 and includes first slide slits 651A and 651B, a second arm 660 that rotates relative to the bracket with respect to an eighth rotation axis X8 and includes second slide slits 661A and 661B, a first arm link 670 that includes first slide ribs 671 and 672 fastened to the first slide slits and moves linearly relative to the first arm as the electronic device is folded or unfolded, and a second arm link 680 that includes second slide ribs 681 and 682 fastened to the second slide slits and moves linearly relative to the second arm as the electronic device is folded or unfolded.

In addition, the hinge apparatus may include a first arm 650 that rotates relative to the bracket with respect to a seventh rotation axis X7, a second arm 660 that rotates relative to the bracket with respect to an eighth rotation axis X8, a first arm link 670 that is rotatably coupled to the first arm with respect to a ninth rotation axis X9 and fixed to the first housing, and a second arm link 680 that is rotatably coupled to the second arm with respect to a tenth rotation axis X10 and fixed to the second housing.

According to an embodiment disclosed in this document, a hinge apparatus 320, 320-1 or HA, which foldably connects a first housing 210 and a second housing 220 of an electronic device 200 with respect to a folding axis F, may include: a bracket 600; a first rotate 610, 910 or 1110 that is fastened to the bracket and rotates relative to the bracket with respect to a first rotation axis X1; a second rotate 620, 920 or 1120 that is fastened to the bracket and rotates relative to the bracket with respect to a second rotation axis X2; a first rotation guide member 530, 930 or 1130 fixed to the first housing; a second rotation guide member 540, 940 or 1140 fixed to the second housing; a first hinge plate 510, 810 or 1010 that is arranged on the first rotate to be movable relative to the folding axis and is coupled to the first rotation guide member to be rotated relative to the first rotation guide member with respect to the third rotation axis; and a second hinge plate 520, 820 or 1020 that is arranged on the second rotate to be movable relative to the folding axis and is coupled to the second rotation guide member to be rotated relative to the second rotation guide member with respect to the fourth rotation axis.

In addition, the hinge apparatus may include: a first opening 511 formed in the first hinge plate and having at least a portion facing the first rotate; a second opening 521 formed in the second hinge plate and having at least a portion facing the second rotate; a first fixing member 550 having at least a portion positioned in the first opening and fixed to the first rotate; and a second fixing member 560 having at least a portion positioned in the second opening and fixed to the second rotate, wherein the first hinge plate may move relative to the first fixing member by a specified linear distance as it rotates relative to the bracket with respect to the third rotation axis, and wherein the second hinge plate may move relative to the second fixing member by the specified linear distance as it rotates relative to the bracket with respect to the fourth rotation axis.

In addition, the first hinge plate may move relative to the first fixing member in a first direction when the electronic device is switched from the unfolded state to the folded state, and may move relative to the first fixing member in a second direction when the electronic device is switched from the folded state to the unfolded state; and the second hinge plate may move relative to the second fixing member in a third direction when the electronic device is switched from the unfolded state to the folded state, and may move relative to the second fixing member in a fourth direction when the electronic device is switched from the folded state to the unfolded state.

## Claims

1. An electronic device (200) comprising:
a first housing (210);
a second housing (220); and
a hinge apparatus (320, 320-1, HA) that foldably connects the first housing and the second housing with respect to a folding axis (F),
wherein the hinge apparatus includes:
a bracket (600);
a first rotate (610, 910, 1110) that is fastened to the bracket and rotates relative to the bracket with respect to a first rotation axis (X1);
a second rotate (620, 920, 1120) that is fastened to the bracket and rotates relative to the bracket with respect to a second rotation axis (X2);
a first rotation guide member (530, 930, 1130) fixed to the first housing;
a second rotation guide member (540, 940, 1140) fixed to the second housing;
a first hinge plate (510, 810, 1010) that is arranged on the first rotate to be movable relative to the folding axis, and is coupled to the first rotation guide member to rotate relative to the first rotation guide member with respect to a third rotation axis (X3); and
a second hinge plate (520, 820, 1020) that is arranged on the second rotate to be movable relative to the folding axis, and is coupled to the second rotation guide member to rotate relative to the second rotation guide member with respect to a fourth rotation axis (X4).

2. The electronic device of claim 1, wherein:
the first hinge plate and the second hinge plate move in a direction away from the folding axis when the electronic device is switched from an unfolded state to a folded state; and
the first hinge plate and the second hinge plate move in a direction closer to the folding axis when the electronic device is switched from the folded state to the unfolded state.

3. The electronic device of claim 1, wherein the first hinge plate and the second hinge plate move in a direction perpendicular to the folding axis when the electronic device is switched from the unfolded state to the folded state or from the folded state to the unfolded state.

4. The electronic device of claim 1, wherein:
the hinge apparatus includes a first opening (511) formed in the first hinge plate and having at least a portion facing the first rotate, a second opening (521) formed in the second hinge plate and having at least a portion facing the second rotate, a first fixing member (550) having at least a portion positioned in the first opening and fixed to the first rotate, and a second fixing member (560) having at least a portion positioned in the second opening and fixed to the second rotate;
the first hinge plate moves by a specified linear distance relative to the first fixing member as it rotates relative to the first rotation guide member with respect to the third rotation axis; and
the second hinge plate moves by the specified linear distance relative to the second fixing member as it rotates relative to the second rotation guide member with respect to the fourth rotation axis.

5. The electronic device of claim 1, wherein the hinge apparatus includes a first rotation rail (531) formed on the first rotation guide member, a second rotation rail (541) formed on the second rotation guide member, a first rotation rib (513) formed on the first hinge plate and fastened to the first rotation rail, and a second rotation rib (523) formed on the second hinge plate and fastened to the second rotation rail.

6. The electronic device of claim 1, wherein the hinge apparatus includes a first rotate link (630) rotatably coupled to the first rotate with respect to a fifth rotation axis (X5) and fixed to the first housing, and a second rotate link (640) rotatably coupled to the second rotate with respect to a sixth rotation axis (X6) and fixed to the second housing.

7. The electronic device of claim 4, wherein:
the first hinge plate moves in a first direction relative to the first fixing member when the electronic device is switched from the unfolded state to the folded state, and moves in a second direction relative to the first fixing member when the electronic device is switched from the folded state to the unfolded state; and
the second hinge plate moves in a third direction relative to the second fixing member when the electronic device is switched from the unfolded state to the folded state, and moves in a fourth direction relative to the second fixing member when the electronic device is switched from the folded state to the unfolded state.

8. The electronic device of claim 4, wherein:
the linear distance of the first hinge plate relative to the first fixing member is based on a difference between a rotation radius of the first rotate with respect to the first rotation axis and a rotation radius of the first hinge plate with respect to the third rotation axis; and
the linear distance of the second hinge plate relative to the second fixing member is based on a difference between a rotation radius of the second rotate with respect to the second rotation axis and a rotation radius of the second hinge plate with respect to the fourth rotation axis.

9. The electronic device of claim 4, wherein:
the first opening is formed in a manner that a width (W1) in a direction perpendicular to the folding axis is longer than a width (W2) in a direction perpendicular to the folding axis of the first fixing member; and
the second opening is formed in a manner that a width (W1) in a direction perpendicular to the folding axis is longer than a width (W2) in a direction perpendicular to the folding axis of the second fixing member.

10. The electronic device of claim 4, wherein:
the first hinge plate includes a first catch (512) on which at least a portion of the first fixing member is seated, and positioned in the first opening; and
the second hinge plate includes a second catch (522) on which at least a portion of the second fixing member is seated, and positioned in the second opening.

11. The electronic device of claim 10, wherein:
the first fixing member includes a body portion (551) positioned in the first opening, a first fragment portion (552) extending in one direction from the body portion and being seated on the first catch, and a second fragment portion (553) extending in an opposite direction to the first fragment portion relative to the body portion and being seated on the first catch; and
the second fixing member includes a body portion (561) positioned in the second opening, a first fragment portion (562) extending in one direction from the body portion and being seated on the first catch, and a second fragment portion (563) extending in an opposite direction to the first fragment portion relative to the body portion and being seated on the second catch.

12. The electronic device of claim 4, wherein:
the first rotate includes at least one first guide groove (6112);
the first fixing member includes a first protrusion (554) inserted into the first guide groove formed in the first rotate;
the second rotate includes at least one second guide groove (6212); and
the second fixing member includes a second protrusion (564) inserted into the second guide groove formed in the second rotate.

13. The electronic device of claim 1, wherein:
the hinge apparatus includes a first seating groove (913) formed in the first rotate, a second seating groove (923) formed in the second rotate, a first insertion portion (811) protruding from one surface of the first hinge plate and being seated in the first seating groove, and a second insertion portion (821) protruding from one surface of the second hinge plate and being seated in the second seating groove;
for the first hinge plate, the first insertion portion moves linearly within the first seating groove in a direction away from the folding axis when the electronic device is switched from the unfolded state to the folded state, and the first insertion portion moves linearly within the first seating groove in a direction closer to the folding axis when the electronic device is switched from the folded state to the unfolded state; and
for the second hinge plate, the second insertion portion moves linearly within the second seating groove in a direction away from the folding axis when the electronic device is switched from the unfolded state to the folded state, and the second insertion portion moves linearly within the second seating groove in a direction closer to the folding axis when the electronic device is switched from the folded state to the unfolded state.

14. The electronic device of claim 1, wherein:
the hinge apparatus includes a first insertion hole (1113) formed in the first rotate, a second insertion hole (1123) formed in the second rotate, a first inclined surface (1114) formed on one surface of the first rotate, a second inclined surface (1124) formed on one surface of the second rotate, a first hook (1011) protruding from one surface of the first hinge plate and having at least a portion inserted into the first insertion hole and in contact with the first inclined surface, and a second hook (1021) protruding from one surface of the second hinge plate and having at least a portion inserted into the second insertion hole and in contact with the second inclined surface;
the first hinge plate moves linearly relative to the first rotate in a direction away from the folding axis when the electronic device is switched from the unfolded state to the folded state, and moves in a direction closer to the folding axis when the electronic device is switched from the folded state to the unfolded state; and
the second hinge plate moves linearly relative to the second rotate in a direction away from the folding axis when the electronic device is switched from the unfolded state to the folded state, and moves in a direction closer to the folding axis when the electronic device is switched from the folded state to the unfolded state.

15. The electronic device of claim 1, wherein the hinge apparatus includes a first arm (650) that rotates relative to the bracket with respect to a seventh rotation axis (X7) and includes first slide slits (651A, 651B), a second arm (660) that rotates relative to the bracket with respect to an eighth rotation axis (X8) and includes second slide slits (661A, 661B), a first arm link (670) that includes first slide ribs (671, 672) fastened to the first slide slits and moves linearly relative to the first arm as the electronic device is folded or unfolded, and a second arm link (680) that includes second slide ribs (681, 682) fastened to the second slide slits and moves linearly relative to the second arm as the electronic device is folded or unfolded.
